(19) Europäisches Patentamt / European Patent Office / Office européen des brevets

(11) **EP 2 722 765 B1**

(12) **EUROPEAN PATENT SPECIFICATION**

(45) Date of publication and mention
of the grant of the patent:
**03.02.2016 Bulletin 2016/05**

(51) Int Cl.:
**_G06F 13/00_** ^(2006.01)

(21) Application number: **12799965.4**

(22) Date of filing: **14.06.2012**

(86) International application number:
**PCT/JP2012/065203**

(87) International publication number:
**WO 2012/173175 (20.12.2012 Gazette 2012/51)**

(54) **CONTENT DELIVERY SYSTEM, CONTROLLER AND CONTENT DELIVERY METHOD**

INHALTSLIEFERSYSTEM, STEUERGERÄT UND INHALTSBEREITSTELLUNGSVERFAHREN

SYSTÈME DE DISTRIBUTION DE CONTENU, SYSTÈME DE COMMANDE ET PROCÉDÉ DE DISTRIBUTION DE CONTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2011  JP 2011131928**
**14.06.2011  JP 2011131929**

(43) Date of publication of application:
**23.04.2014  Bulletin 2014/17**

(73) Proprietor: **NEC Corporation**
**Tokyo 108-8001 (JP)**

(72) Inventor: **OZAWA, Kazunori**
**Tokyo 108-8001 (JP)**

(74) Representative: **Betten & Resch**
**Patent- und Rechtsanwälte PartGmbB**
**Maximiliansplatz 14**
**80333 München (DE)**

(56) References cited:
**EP-A1- 2 249 549       WO-A1-2011/044829**
**JP-A- 2003 228 534    JP-A- 2004 086 560**
**JP-A- 2006 508 621    US-A1- 2011 110 317**

**Description**

TECHNICAL FIELD

This invention relates to a content delivery system, a controller and a content delivery method. More particularly, it relates to a content delivery system, a controller and a content delivery method in which the content inclusive of moving pictures, still pictures, audio, software, applications and so forth are cached on a mobile network and delivered to a variety of terminals, such as mobile handsets, smartphones, PCs (Personal Computers) or game machines. Document D1=WO 2011/044829 A1 (CHENGDU HUAWEI SYMANTEC TECH [CN]; LAN GANG [CN]; WANG RUI [CN]; GONG) 21 April 2011 (2011-04-21); & US 2012/203910 A1 (LAN GANG [CN] ET AL) 9 August 2012 (2012-08-09) discloses a method to improve the efficiency of caching.

BACKGROUND

As the speed of transmission over the mobile network as well as the capacity of the mobile network is increasing, the content delivery of providing the content over the mobile network to a variety of terminals, inclusive of mobile terminals, is coming into widespread use. It may be anticipated that the speed of transmission as well as the capacity of the mobile network will increase further in time to come by techniques such as LTE (Long Term Evolution) or EPC (Evolved Packet Core).

For example, Patent Literature 1 shows a technique for a content delivery system in which a cache apparatus is provided to reduce the access time as well as to prevent congestion in the network.
Patent Literature 1 : JP Patent Kokai Publication No. JP2003-228534A

SUMMARY

The following analysis is made by the present inventors.
It may be anticipated that, towards and even beyond the year 2013, the volume of the traffic of the data system delivered over the mobile network will increase by a factor of 8 to 10, and that the picture content accounts for a major portion of the entire traffic volume. On the other hand, with an improved terminal capacity attendant on rapid coming into use of smartphones, the size of the picture content is estimated to be increasing. In near future, the content of large capacity by High-Vision resolution is predicted to be circulated on the mobile network as well.
It is noted that, in delivering contents under management, inclusive of pictures, moving pictures, audio, software or applications, over the mobile network, the conventional practice has been to transmit requests for contents from the total of terminals by a packet forwarding apparatus to a storage apparatus on the mobile network that holds a plurality of contents under management in store. In turn, the storage apparatus delivers the contents by the packet forwarding apparatus to the total of the terminals.
On the other hand, if, in delivering the contents inclusive of pictures, moving pictures, audio, software or applications over the mobile network, the contents delivered are those residing on the Internet, the conventional practice has been to transmit the requests for contents from the total of the terminals to a delivery server on the Internet by a packet forwarding apparatus. The delivery server then delivers the contents to the total of the terminals by the packet forwarding apparatus.
However, in this configuration, the following problems are met.
If accesses from the terminals are concentrated to a frequently accessed popular content, the traffic on the mobile network is concentrated to that accessing the content stored in the storage apparatus that holds in store the contents under management. In this case, the load on the network is locally rapidly increased, thus eventually leading to congestion on the mobile network. As a result, delays or packet losses may be produced, or the picture may become frozen on the terminal side. In addition, the picture may be degraded in quality or the voice interrupted, thus deteriorating the QoE (Quality of Experience). The problem is severer with increase in the number of the terminals or in the content capacity.
In similar manner, if accesses from the terminals are concentrated on the frequently accessed popular content, the traffic is concentrated to that passing through the mobile network and getting to the delivery server. In addition, if the load on the network is locally rapidly increased in a territory where accesses are made frequently, traffic congestion occurs on the mobile network connecting to the delivery server. As a result, delays or packet losses may be produced, or the picture may become frozen on the terminal side. In addition, the picture may be degraded in quality or the voice interrupted, thus deteriorating the QoE (Quality of Experience). This problem may be severer with increase in the number of the terminals or in the content capacity.
Hence, in the content delivery over the mobile network, it is incumbent to provide a solution to the problem of network congestion. It is therefore an object of the present invention to provide a content delivery system, a controller and a content delivery method that are able to cater for solution to the problem.

According to a first aspect of the present invention, there is provided a content delivery system, comprising: a delivery server on the Internet or a storage apparatus on a mobile network, the delivery server or the storage apparatus holding a plurality of contents in store; a packet forwarding apparatus that forwards a packet; a plurality of cache servers that temporarily retain at least part of the plurality of contents; and a controller that controls the plurality of cache servers. The controller receives, from the plurality of cache servers, an access frequency to each of the plurality of contents and a load state of each of the plurality of cache servers, receives, from the packet forwarding apparatus, information of a terminal being or not being in a service area, decides that a content an access frequency to which is higher than a predetermined threshold value will be allocated to predetermined two or more of the plurality of cache servers, decides that at least part of the other contents will be allocated to the plurality of cache servers using at least one out of the access frequency, the load state, the information of the terminal being or not being in a service area and topology information of the mobile network, and instructs the plurality of cache servers to retain the plurality of contents depending on the decided allocation. The plurality of cache servers caches the plurality of contents as instructed, and, on reception of a request for a content from the terminal, delivers the requested content to the terminal via the packet forwarding apparatus.

According to a second aspect of the present invention, there is provided a controller that, from a plurality of cache servers that temporarily retain at least part of a plurality of contents stored in a delivery server on the Internet or in a storage apparatus of a mobile network, receives an access frequency to each of the plurality of the contents and a load state of each of the plurality of cache servers, receives, from the packet forwarding apparatus, information of a terminal being or not being in a service area, decides that a content an access frequency to which is higher than a predetermined threshold value will be allocated to predetermined two or more of the plurality of cache servers, decides that at least part of the other contents will be allocated to the plurality of cache servers using at least one out of the access frequency, the load state, the information of the terminal being or not being in a service area and topology information of the mobile network, and instructs the plurality of cache servers to retain the plurality of contents depending on the decided allocation.

According to a third aspect of the present invention, there is provided a content delivery method, comprising: by a controller, receiving, from a plurality of cache servers that temporarily retains at least part of a plurality of contents stored in a delivery server on the Internet or a storage apparatus on a mobile network, an access frequency to each of the plurality of contents and a load state of each of the plurality of cache servers; receiving, from the packet forwarding apparatus, information of a terminal being or not being in a service area; deciding that a content an access frequency to which is higher than a predetermined threshold value will be allocated to predetermined two or more of the plurality of cache servers; deciding that at least part of the other contents will be allocated to the plurality of cache servers using at least one out of the access frequency, the load state, the information of the terminal being or not being in a service area and topology information of the mobile network; and instructing the plurality of cache servers to retain the plurality of contents depending on the decided allocation.

With the content delivery system, controller and the content delivery method, according to the present invention, it is possible to avoid network congestion in case the content is delivered over a mobile network.


BRIEF DESCRIPTION OF DRAWINGS

Fig.1 is a block diagram showing an example configuration of a content delivery system according to a first exemplary embodiment.

Fig.2 is a block diagram showing an example configuration of a controller in the content delivery system according to the first exemplary embodiment.

Fig.3 is a block diagram showing an example configuration of a content allocation calculation unit of the controller in the content delivery system according to the first exemplary embodiment.

Fig.4 is a block diagram showing an example configuration of a cache server in the content delivery system according to the first exemplary embodiment.

Fig.5 is a block diagram showing an example configuration of a content delivery system according to a second exemplary embodiment.

Fig.6 is a block diagram showing an example configuration of a content delivery system according to a third exemplary embodiment.

Fig.7 is a block diagram showing an example configuration of a controller in the content delivery system according to the third exemplary embodiment.

Fig.8 is a block diagram showing an example configuration of a content allocation calculation unit of the controller in the content delivery system according to the third exemplary embodiment.

Fig.9 is a block diagram showing an example configuration of a cache server in the content delivery system according to the third exemplary embodiment.

Fig.10 is a block diagram showing an example configuration of a content delivery system according to a fourth exemplary embodiment.

PREFERRED MODES

Initially, the gist of the present invention will be briefly explained by way of a synopsis. It is noted that reference symbols used in the synopsis are merely illustrations to assist in the understanding and are not intended to restrict the invention to the particular mode shown in the drawings.

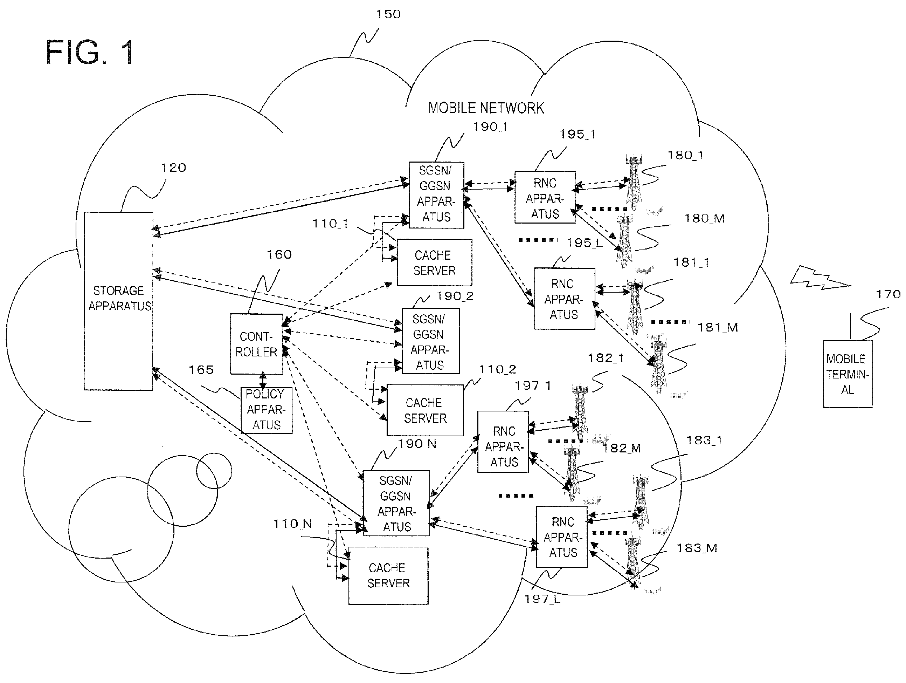

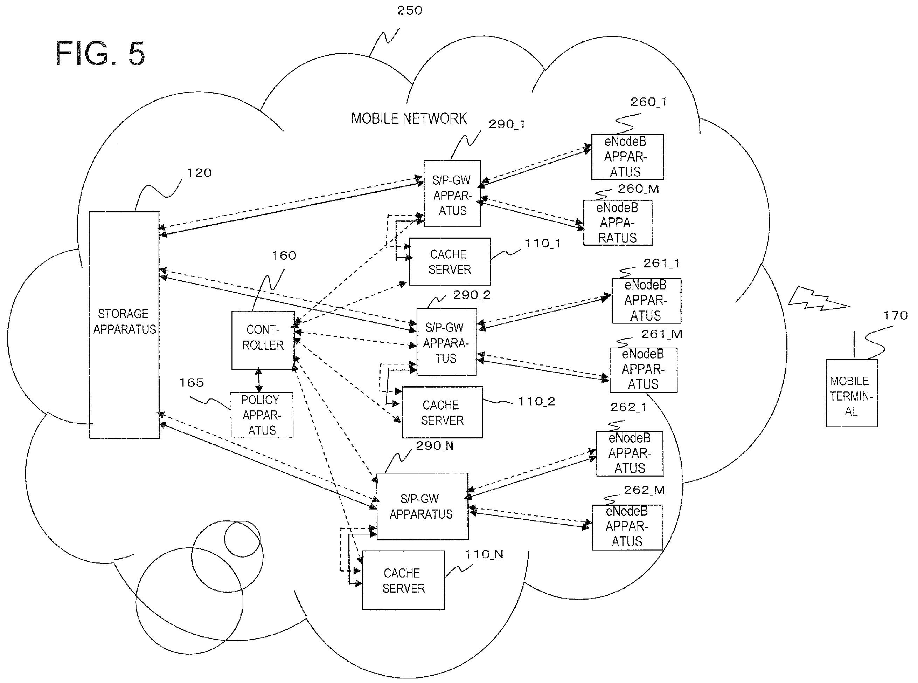

Referring to Fig.1 and Fig.5, a content delivery system according to the present invention is a content delivery system provided on a mobile network (150 of Fig.1 or 250 of Fig.5). The content delivery system comprises a storage apparatus (120) that holds a plurality of contents in store and a packet forwarding apparatus that forwards a packet (SGSN/GGSN apparatuses 190_1 to 190_N of Fig.1 or S/P-GW apparatuses 290_1 to 290_N of Fig.5). The content delivery system also comprises a plurality of cache servers (110_1 to 110_N) that temporarily retain at least a part of the plurality of the contents under management, and a controller (160) that controls the plurality of cache servers (110_1 to 110_N). The controller (160) receives an access frequency to each of the plurality of the contents under management and a load state of each of the plurality of cache servers (110_1 to 110_N) from the plurality of cache servers (110_1 to 110_N). The controller also receives information of a terminal (mobile terminal 170) being or not being in a service area from the packet forwarding apparatus (190_1 to 190_N or 290_1 to 290_N). The controller decides that a content under management, an access frequency to which is higher than a predetermined threshold value, will be allocated to two or more of the plurality of cache servers (110_1 to 110_N) predetermined. The controller also decides that at least part of the other contents under management will be allocated to the plurality of cache servers (110_1 to 110_N) using at least two out of the access frequency, the load state, the information of a terminal being or not being in a service area and topology information of the mobile network (150 or 250). The controller also instructs the plurality of cache servers (110_1 to 110_N) to retain the contents under management depending on the content allocations decided. The plurality of cache servers (110_1 to 110_N) reads out the contents under management from the storage apparatus (120) and caches them as instructed. On reception of a request for the content under management from the terminal (170), the plurality of cache servers delivers the requested content to the terminal (170) via the packet forwarding apparatus (190_1 to 190_N or 290_1 to 290_N).

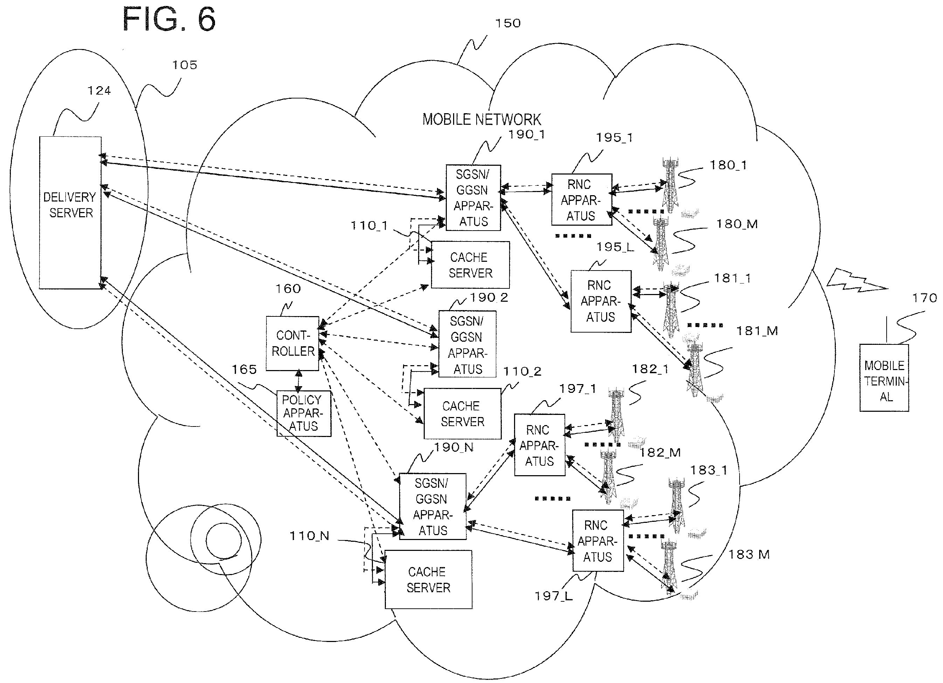

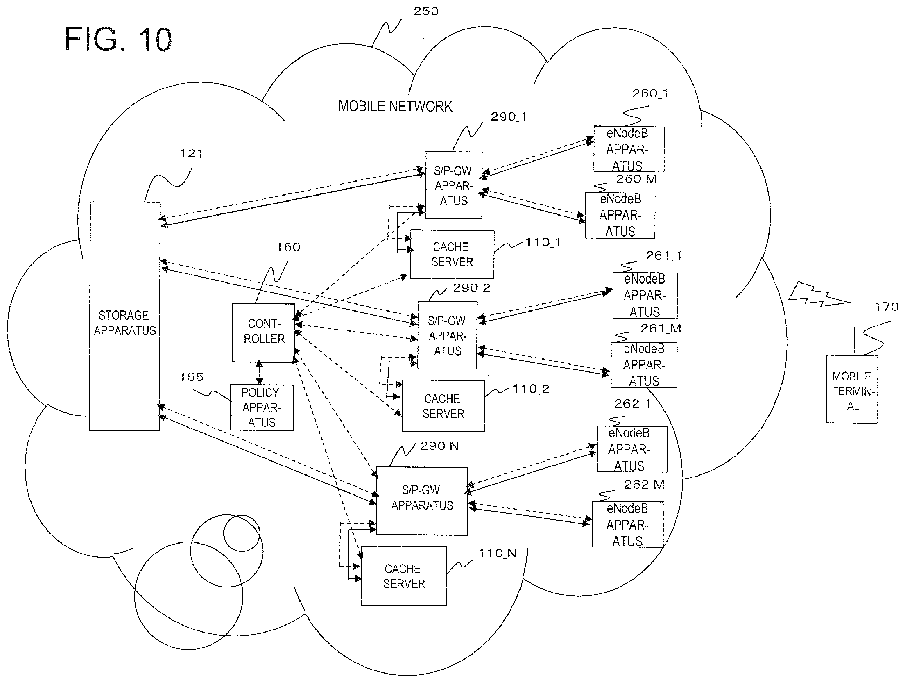

Referring to Fig.6 and Fig.10, a content delivery system according to the present invention is a content delivery system provided on a mobile network (150 of Fig.6 or 250 of Fig.10). The content delivery system comprises a packet forwarding apparatus that forwards a packet (SGSN/GGSN apparatuses 190_1 to 190_N of Fig.6 or S/P-GW apparatuses 290_1 to 290_N of Fig.10). The content delivery system also comprises a plurality of cache servers (110_1 to 110_N) that temporarily retain at least a part of the plurality of the contents, delivered from a delivery server (124) on the Internet or a storage apparatus (121) on the mobile network, and a controller (160) that controls the plurality of cache servers (110_1 to 110_N). The controller receives an access frequency to each of the plurality of the contents and a load state of each of the plurality of cache servers (110_1 to 110_N) from the plurality of cache servers (110_1 to 110_N). The controller also receives information of a terminal (mobile terminal 170) being or not being in a service area from the packet forwarding apparatus (190_1 to 190_N or 290_1 to 290_N). The controller decides that a content an access frequency to which is higher than a predetermined threshold value will be allocated to two or more of the plurality of cache servers (110_1 to 110_N) predetermined. The controller also decides that at least part of the other contents will be allocated to the plurality of cache servers (110_1 to 110_N) using predetermined evaluation criteria and at least two out of the access frequency, the load state, the information of a terminal being or not being in a service area and topology information of the mobile network (150 or 250). The controller instructs the plurality of cache servers (110_1 to 110_N) to retain the contents depending on the content allocations decided. The plurality of cache servers (110_1 to 110_N) cache the contents as instructed. On reception of a request for the content from the terminal (170), the plurality of cache servers delivers the requested content to the terminal (170) via the packet forwarding apparatus (190_1 to 190_N or 290_1 to 290_N).

With the content delivery system according to the present invention, it is possible to avoid network congestion in performing content delivery via the mobile network.

The following modes are possible in the present invention:

(Mode 1)

A content delivery system provided on a mobile network is provided. The system comprises: a storage apparatus that holds a plurality of contents under management in store, a packet forwarding apparatus that forwards a packet, a plurality of cache servers that temporarily retain at least part of the plurality of the contents under management, and a controller that controls the plurality of cache servers. The controller receives, from the plurality of cache servers, an access frequency to each of the plurality of contents under management and a load state of each of the plurality of cache servers. The controller also receives, from the packet forwarding apparatus, information of a terminal being or not being in a service area. The controller also decides that a content under management, an access frequency to which is higher than a predetermined threshold value, will be allocated to two or more of the plurality of cache servers predetermined. Also, the controller decides that at least part of the other contents under management will be allocated to the plurality of cache servers, using at least two out of the access frequency, the load state, the information of the terminal being or not being in a service area and topology information of the mobile network. The controller also instructs the plurality of cache servers to retain the contents under management depending on the allocations of the contents under management decided. The plurality of cache servers reads out the contents under management from the storage apparatus and caches them as instructed. On reception of a request for the contents under management from the terminal, the plurality of cache servers deliver the requested contents under management to the terminal via the packet forwarding apparatus.

(Mode 2)

The controller may decide that the contents under management, the access frequency to which is not higher than the predetermined threshold value, will be located to a cache server that minimizes $\sum_j Cij*Aj*Sj$, where Cij is a cost function of a jth content under management for an ith cache server out of the plurality of cache servers, Aj is an access frequency to the jth content under management and Sj is a size of the jth content under management.

(Mode 3)

The controller may calculate the cost function Cij using at least two out of the load state of the ith one of the plurality of cache servers, the information of the mobile terminal being or not being in a service area and the topology information of the mobile network.

(Mode 4)

The controller may decide that the contents under management will be allocated to a predetermined plural number of cache servers or a plural number of cache servers satisfying a predetermined condition out of the plurality of cache servers.

(Mode 5)

The packet forwarding apparatus may be an SGSN apparatus, a GGSN apparatus or an SGSN/GGSN apparatus of a mobile packet network, or an S-GW apparatus, a P-GW apparatus or an S/P-GW apparatus of a mobile EPC network.

(Mode 6)

The content under management may include at least one out of a moving picture, a still picture, voice, audio, software, application and data.

(Mode 7)

A controller in a content delivery system provided on a mobile network is also provided. The controller receives, from a plurality of cache servers that temporarily retain at least part of a plurality of contents under management stored in a storage apparatus, an access frequency to each of the plurality of the contents under management and a load state of each of the plurality of cache servers. The controller also receives information of a terminal being or not being in a service area from the packet forwarding apparatus. The controller decides that a content under management an access frequency to which is higher than a predetermined threshold value will be allocated to two or more of the plurality of cache servers predetermined. The controller also decides that at least part of the other contents under management will be allocated to the plurality of cache servers using at least two out of the access frequency, the load state, the information of the terminal being or not being in a service area and topology information of the mobile network. The controller also instructs the plurality of cache servers to retain the contents under management depending on the allocations of the content under management decided.

(Mode 8)

The controller may decide that the content under management, the access frequency to which is not higher than the predetermined threshold value, will be allocated to a cache server that minimizes $\sum_j C_{ij}*A_j*S_j$, where $C_{ij}$ is a cost function of a jth content under management for an ith cache server of the plurality of cache servers, $A_j$ is an access frequency to the jth content under management and $S_j$ is a size of the jth content under management.

(Mode 9)

The controller may calculate the cost function $C_{ij}$ using at least two out of the load state of the ith cache server of the plurality of cache servers, the information of the terminal being or not being in a service area and the topology information of the mobile network.

(Mode 10)

There is also provided a content delivery method for a content delivery system provided on a mobile network. The content delivery method comprises: by a controller, receiving, from a plurality of cache servers that temporarily retain at least part of a plurality of contents under management stored in the storage apparatus, an access frequency to each of the plurality of contents under management and a load state of each of the plurality of cache servers; receiving information of a terminal being or not being in a service area from the packet forwarding apparatus; deciding that a content under management an access frequency to which is higher than a predetermined threshold value will be allocated to predetermined two or more of the plurality of cache servers; deciding that at least part of the other contents under management will be allocated to the plurality of cache servers using at least two out of the access frequency, the load state, the information of the terminal being or not being in a service area and topology information of the mobile network; and instructing the plurality of cache servers to retain the contents under management depending on the content allocations decided.

(Mode 11)

In the above content delivery method, the controller may decide that the content under management, the access frequency to which is not higher than the predetermined threshold value, will be allocated to a cache server that minimizes $\sum_j C_{ij}*A_j*S_j$, where $C_{ij}$ is a cost function of a jth content under management for an ith cache server out of the plurality of cache servers, $A_j$ is an access frequency to the jth content under management and $S_j$ is a size of the jth content under management.

(Mode 12)

In the above content delivery method, the controller may calculate the cost function $C_{ij}$ using at least two out of the load state of the ith cache server of the plurality of cache servers, the information of the terminal being or not being in a service area and the topology information of the mobile network.

(Mode 13)

There is provided a content delivery system provided on a mobile network. The content delivery system comprises a packet forwarding apparatus that forwards a packet, a plurality of cache servers that temporarily retain at least a part of the plurality of contents delivered from a delivery server on the Internet or from a storage apparatus on the mobile network, and a controller that controls the plurality of cache servers. The controller receives, from the plurality of cache servers, an access frequency to each of the plurality of contents and a load state of each of the plurality of cache servers. The controller also receives information of a terminal being or not being in a service area from the packet forwarding apparatus. The controller decides that a content, an access frequency to which is higher than a predetermined threshold value, will be allocated to two or more of the plurality of cache servers predetermined. The controller also decides that at least part of the other contents will be allocated to the plurality of cache servers using predetermined evaluation criteria and at least two out of the access frequency, the load state, the information of the terminal being or not being in a service area and topology information of the mobile network. The controller also instructs the plurality of cache servers to retain the contents depending on the content allocations decided. The plurality of cache servers cache the contents as instructed and, on reception of a request for the content from the terminal, deliver the requested content to the terminal via the packet forwarding apparatus.

(Mode 14)

The controller may decide that a content, an access frequency to which is not higher than the predetermined threshold value, will be allocated to a cache server that maximizes $\sum_j Bij*Aj*Sj - \sum_j Cij*Aj*Sj$, where Bij is a cost function in case a jth content is not cached in an ith cache server of the plurality of cache servers and is delivered from the delivery server or the storage apparatus to the terminal, Cij is a cost function in case the jth content is cached in the ith cache server and delivered to the terminal, Aj is an access frequency to the jth content and Sj is a size of the jth content.

(Mode 15)

The controller may calculate the cost functions Bij and Cij using at least two out of the load state of the ith cache server of the plurality of cache servers, the information of the terminal being or not being in a service area and the topology information of the mobile network.

(Mode 16)

The controller may decide that the content will be allocated to a predetermined plural number of cache servers or a plural number of cache servers satisfying a predetermined condition, out of the plurality of cache servers.

(Mode 17)

The packet forwarding apparatus may be an SGSN apparatus, a GGSN apparatus or an SGSN/GGSN apparatus of a mobile packet network, or an S-GW apparatus, a P-GW apparatus or an S/P-GW apparatus of a mobile EPC network.

(Mode 18)

The content may include at least one out of a moving picture, a still picture, voice, audio, software, application and data.

(Mode 19)

There is provided a controller in a content delivery system provided on a mobile network. The controller receives, from a plurality of cache servers that temporarily retain at least a part of a plurality of contents stored in a delivery server on the Internet or in a storage apparatus of a mobile network, an access frequency to each of the plurality of the contents and a load state of each of the plurality of cache servers. The controller also receives, from the packet forwarding apparatus, information of a terminal being or not being in a service area. The controller decides that a content an access frequency to which is higher than a predetermined threshold value will be allocated to two or more of the plurality of cache servers predetermined. The controller also decides that at least part of the other contents will be allocated to the plurality of cache servers using predetermined evaluation criteria and at least two out of the access frequency, the load state, the information of the terminal being or not being in a service area and topology information of the mobile network. The controller instructs the plurality of cache servers to retain the contents depending on the content allocations decided.

(Mode 20)

The controller may decide that the contents, the access frequency to which is not higher than the predetermined threshold value, will be allocated to a cache server that maximizes $\sum_j Bij*Aj*Sj - \sum_j Cij*Aj*Sj$, where Bij is a cost function in case a jth content is not cached in an ith cache server of the plurality of cache servers and is delivered from the delivery server or the storage apparatus to the terminal, Cij is a cost function in case the jth contents is cached in the ith cache server and delivered to the terminal, Aj is an access frequency to the jth content and Sj is a size of the jth content.

(Mode 21)

The controller may calculate the cost functions Bij and Cij using at least two out of the load state of the ith cache server of the plurality of cache servers, the information of the terminal being or not being in a service area and the topology information of the mobile network.

(Mode 22)

There is provided a content delivery method for a content delivery system provided on a mobile network. The method comprises: by a controller, receiving, from a plurality of cache servers that temporarily retain at least a part of a plurality of contents stored in a delivery server on the Internet or a storage apparatus on a mobile network, an access frequency to each of the plurality of contents and a load state of each of the plurality of cache servers; receiving information of a terminal being or not being in a service area from the packet forwarding apparatus; deciding that a content an access frequency to which is higher than a predetermined threshold value will be allocated to predetermined two or more of the plurality of cache servers; deciding that at least part of the other contents will be allocated to the plurality of cache servers using predetermined evaluation criteria and at least two out of the access frequency, the load state, the information of the terminal being or not being in a service area and topology information of the mobile network; and instructing the plurality of cache servers to retain the contents depending on the content allocations decided.

(Mode 23)

In the above delivery method, the controller may decide that the content, the access frequency to which is not higher than the predetermined threshold value, will be allocated to a cache server that maximizes $\sum_j Bij^*Aj^*Sj - \sum_j Cij^*Aj^*Sj$, where Bij is a cost function in case a jth content is not cached in an ith cache server of the plurality of cache servers and is delivered from the delivery server or the storage apparatus to the terminal, Cij is a cost function in case the jth content is cached in the ith cache server and delivered to the terminal, Aj is an access frequency to the jth content and Sj is a size of the jth content.

(Mode 24)

In the above content delivery method, the controller may calculate the cost functions Bij and Cij using at least two out of the load state of the ith one of the plurality of cache servers, the information of the terminal being or not being in a service area, and the topology information of the mobile network.

(First Exemplary Embodiment)

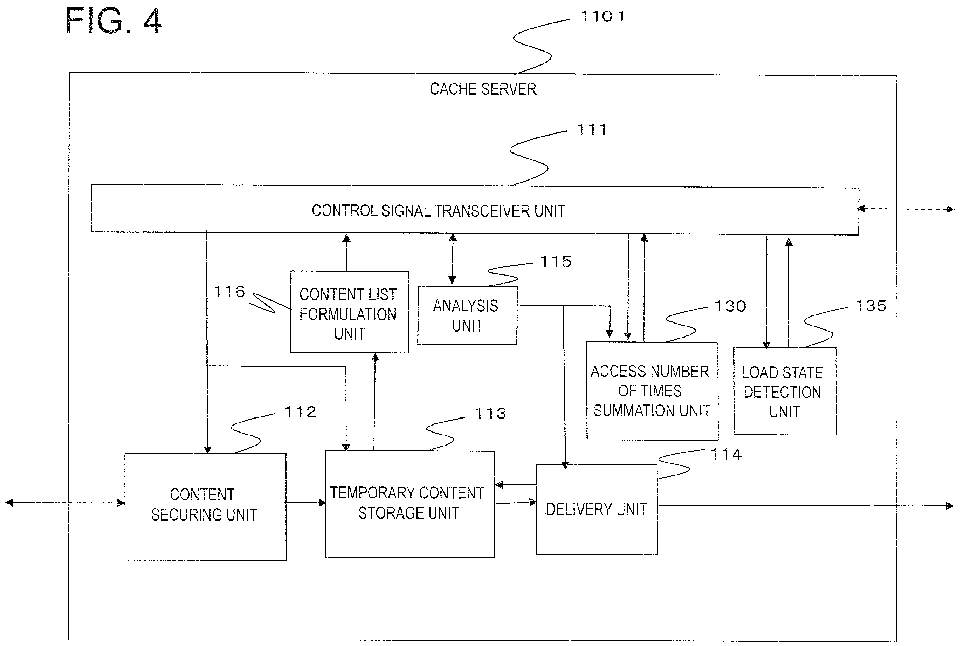

A configuration as well as an operation of a content delivery system according to a first exemplary embodiment will now be explained with reference to Fig.1 through to Fig.4.
The following exemplary embodiment shows a case in which the content is a moving picture, as an example. However, the same configuration may be used for the case in which the content is a still picture, audio, voice, software, application or data.
Fig.1 depicts a block diagram showing a configuration of a content delivery system of the present exemplary embodiment, in which a mobile network is a 3G (3rd Generation) mobile network and a packet forwarding apparatus is an SGSN/GGSN (Serving GPRS Support Node/Gateway GPRS Support Node) apparatus.
Referring to Fig.1, there is stored in a storage apparatus 120 the content(s) owned by a mobile operator or the content(s) for which the mobile operator has entered into a delivery contract with a content provider. In the present description, these content(s) are termed the content(s) under management. Here, the content(s) under management are assumed to be a compressed/encoded bit stream of the content(s) or a file containing such bit stream. The content(s) includes at least one out of moving pictures, still pictures, audio and speech and the like. It is noted that the content(s) under management may also be software, applications or data.
An N-number (N ≥ 2) of SGSN/GGSN apparatuses 190_1 to 190_N is arranged on a mobile network 150. The SGSN/GGSN apparatus 190_1 is connected to RNC (radio network controller) apparatuses 195_1 to 195_L, and the SGSN/GGSN apparatus 190_N is connected to RNC (radio network controller) apparatuses 197__1 to 197_L, where L ≥ 2. Although an L-number of RNC apparatuses are also connected to the SGSN/GGSN apparatus 190_2, these RNC apparatuses are not shown in view of space. In addition, an M-number, where M ≥ 2, of base station apparatuses are connected to each RNC apparatus. For example, an M-number of base station apparatuses 180_1 to 180_M are connected to the RNC apparatus 195_1.
In Fig.1, one cache server is connected to a GGSN function part of each SGSN/GGSN apparatus. For example, a cache server 110_1 is connected to the SGSN/GGSN apparatus 190_1. It is noted that the SGSN/GGSN apparatus denotes such a apparatus in which a SGSN function unit and a GGSN function unit are installed in one and the same place.
An N-number of cache servers are connected to a single controller 160. It is noted that not the total but a part of the N-number of cache servers may be connected to the controller 160.
In case a mobile terminal 170 sends a delivery connection request message, stating a URL (Uniform Resource Locator) of the content it requests, a base station apparatus whose service area covers the mobile terminal receives the connection request message. Such base station apparatus, which is one of base station apparatuses 181_1 to 181_M in the case of Fig.1, receives the delivery connection request message. The base station apparatus sends the connection request message to the RNC apparatus that supervises the base station apparatus. In the case of Fig.1, such RNC apparatus is the RNC apparatus 195_L.

On reception of the connection request message from the base station apparatus, the RNC apparatus 195_L saves the message, an IP (Internet Protocol) address of a storage apparatus 120 and an IP address of the mobile terminal in a payload portion of a GTP (GPRS Tunneling Protocol) packet. The RNC apparatus then forwards the GTP packet to the SGSN/GGSN apparatus 190_1 that collectively handles the RNC apparatuses 195_1 to 195_L.

The SGSN/GGSN apparatus 190_1 then receives the GTP packet.

The cache server 110_1 is connected to a Gi interface of the GGSN function part of the SGSN/GGSN apparatus 190_1. The cache server 110_N is connected to a Gi interface of the GGSN function part of the SGSN/GGSN apparatus 190_N.

To the controller 160, there are connected the cache servers 110_1 to 110_N and a policy apparatus 165. The controller 160 decides that the contents, saved in the storage apparatus 120, will be allocated to the respective cache servers, and sends a content allocation command to each cache server.

On reception of the content allocation command from the controller 160, the cache servers access the storage apparatus 120 for the specified content via the SGSN/GGSN apparatus to save the content therein. When a request is made for the content from the mobile terminal 170, each cache server delivers the content of the request to the mobile terminal 170.

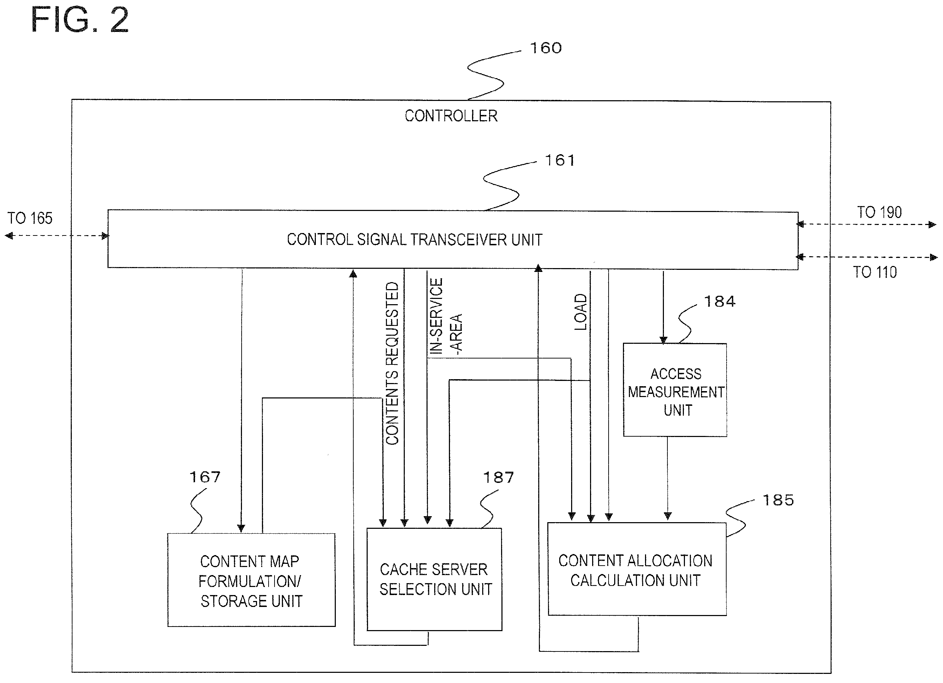

The configuration of the controller 160 will now be explained with reference to Fig.2, which depicts a block diagram showing an example configuration of the controller 160. Referring to Fig.2, the controller 160 includes a control signal transceiver unit 161, an access measurement unit 184, a content allocation calculation unit 185, a cache server selection unit 187 and a content map formulation/storage unit 167.

The control signal transceiver unit 161 receives, from each of the cache servers 110_1 to 110_N, the information on the access frequency to each content and the information on the load status of each cache server. The control signal transceiver unit 161 delivers the former information to the access measurement unit 184, while delivering the latter information to the content allocation calculation unit 185 and to the cache server selection unit 187. The control signal transceiver unit 161 also receives, from the policy apparatus 165, the cost information, delay information or the like for each of network routing paths, by way of the network topology information, and outputs the various information to the content allocation calculation unit 185. The control signal transceiver unit 161 also receives, from the packet forwarding apparatus 190_1 and so forth, the information of the terminal 170 being or not being in a service area, and outputs the information to the content allocation calculation unit 185 and to the cache server selection unit 187.

The access measurement unit 184 collects the access numbers of times to the respective contents from each cache server every pre-set time interval or whenever a pre-set condition has been met. The access measurement unit 184 adds the access numbers of times together for the total of the cache servers. The access measurement unit 184 sums the access numbers of times for the cache servers in their entirety, from one content to another, and outputs the result to the content allocation calculation unit 185.

The content allocation calculation unit 185 receives the state of load on the cache servers, the network topology information and the information of the terminal 170 being or not being in a service area from the control signal transceiver unit 161. The content allocation calculation unit 185 also receives the access frequency from the access measurement unit 184 from one content to another.

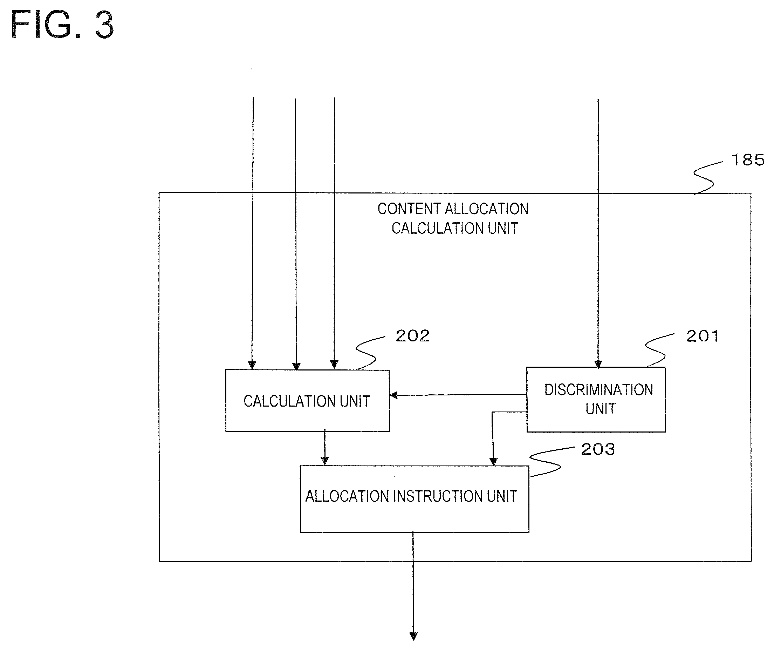

Fig.3 depicts a block diagram showing an example configuration of the content allocation calculation unit 185. Referring to Fig.3, the content allocation calculation unit 185 includes a discrimination unit 201, a calculation unit 202 and an allocation instruction unit 203.

The discrimination unit 201 receives the access numbers of times from the access measurement unit 184 and discriminates the contents the frequency of accesses to which exceeds a pre-set threshold value. The discrimination unit 201 outputs the information for these contents to the allocation instruction unit 203 in order for the contents to be allocated by the allocation instruction unit 203 in a predetermined manner. In allocating the contents in the predetermined manner, it is possible for the allocation instruction unit 203 to allocate the contents, the frequency of accesses to which exceeds a pre-set threshold value, to the total of the cache servers. The allocation instruction unit 203 may also perform content allocation in a different manner. The discrimination unit 201 also outputs to the calculation unit 202 the information on the contents the frequency of accesses to which is less than a predetermined threshold value.

The calculation unit 202 receives, from the discrimination unit 201, the content information the frequency of accesses to which is not higher than a predetermined threshold value. Specifically, the calculation unit 202 receives, from the control signal transceiver unit 161 of Fig.2, the load state of the cache servers, the network topology information and the information of the terminal 170 being or not being in a service area. Using at least two out of the three information items, the calculation unit 202 calculates the equation (1):

$$Di = \min_i \sum_j Cij * Aj * Sj \qquad (1)$$

for each of the contents the frequency of accesses to which is not higher than a predetermined threshold value. The calculation unit 202 decides on the cache servers, the above contents are to be allocated to, and outputs the content allocation instructing information for the respective cache servers to the allocation instruction unit 203.

The calculation unit 202 selects the cache server i which will minimize Di of the equation (1), in which Di denotes an evaluation function for an ith cache server, Cij denotes a cost function of the jth content for the ith cache server, Aj is the frequency of accesses to the jth content and Sj denotes the size of the jth content. Note that the cost function Cij is to be calculated from at least two out of the network topology information, the information on the load state of the cache server i and the information of the terminal 170 being or not being in a service area, in accordance with predetermined criteria.

It is noted that, to reduce the volume of calculations of the equation (1), the equation (1) may be calculated only for a predetermined plural number of cache servers, or the equation (1) may be calculated only for a cache server(s) that satisfies a predetermined condition(s). By the predetermined condition(s) is meant such a condition that the equation (1) is to be calculated only for such cache server that has delivered its load state which is lower than a predetermined threshold value.

The allocation instruction unit 203 sends to each relevant cache server, via the control signal transceiver unit 161 of Fig.2, an instruction to secure a copy of the content of interest from the storage apparatus 120 and to store the so secured copy therein.

It is noted that the calculations of content allocations by equation (1) as well as sending instructions for the cache server of interest to cache the content of interest may be carried out at a predetermined time interval or whenever a predetermined condition has been met. Though not in a limiting meaning, the predetermined condition may include such a condition in which the frequency of accesses to the contents currently collected by the access measurement unit 184 has been changed as compared to that previously collected, with the degree of change exceeding a predetermined threshold value.

Returning to Fig.2, the cache server selection unit 187 receives the information of the terminal 170 being or not being in service area, the information on the loaded state of each cache server and the information on the content requested by the terminal 170, such as URL, from the control signal transceiver unit 161. The cache server selection unit 187 also receives a content map from the content map formulation/storage unit 167. The content map is such a map that indicates which content is being cached by each cache server. The cache server selection unit 187 first selects a group of cache servers that are caching the content requested by the terminal 170. The cache server selection unit 187 then selects such a cache server which is closest to the terminal 170 and the load state of which is not higher than a predetermined threshold value. To make such selection, the cache server selection unit 187 uses the load state information and the information of the mobile terminal being or not being in a service area.

The cache server selection unit 187 instructs the selected cache server, via the control signal transceiver unit 161, to deliver the content as requested by the terminal.

The content map formulation/storage unit 167 receives the content list from the cache servers 110_1 to 110_N, via the control signal transceiver unit 161, at a predetermined time interval. The content map formulation/storage unit 167 formulates the content map indicating which contents are temporarily stored in which cache servers, and holds the so formulated map in store.

The configuration of the cache server 110_1, connected to the SGSN/GGSN apparatus 190_1, will now be described with reference to Fig.4 by way of explaining the configuration of the cache server. It is noted that the other cache server 110_2 to the cache server 110_N are each of the same configuration as the cache server 110_1 and hence the corresponding description is dispensed with.

Fig.4 depicts a block diagram showing the configuration of the cache server 110_1 as an example. Referring to Fig.4, the cache server 110_1 includes a control signal transceiver unit 111, an analysis unit 115, a content securing unit 112, a temporary content storage unit 113, a content list formulation unit 116, a access number of times summation unit 130, a load state detection unit 135 and a delivery unit 114.

Referring to Fig.4, the control signal transceiver unit 111 receives a connection request message from the mobile terminal 170 and a GTP packet from the SGSN/GGSN apparatus 190_1 for the cache server as selected by the cache server selection unit 187 shown in Fig.2. In the GTP packet, there are stored, above all, a reception IP address of a mobile terminal and the URL of the content as requested. The control signal transceiver unit 111 receives the information of the mobile terminal 170 being or not being in service area from the SGSN/GGSN apparatus.

The analysis unit 115 reads out the connection request message stored in a payload part of the GTP packet and extracts the information inclusive of the reception IP address of the mobile terminal 170 and the URL of the requested content. The analysis unit 115 sends these information items to the controller 160 via the control signal transceiver unit 111. The analysis unit 115 also outputs the information inclusive of the URL of the contents to the access number of times summation unit 130, while outputting the information of the mobile terminal 170 being or not being in a service area to the controller 160.

The content securing unit 112 reads out the specified content from the storage apparatus 120 in accordance with content allocation calculation instructions sent from the content allocation calculation unit 185 of the controller 160 shown in Fig.2 and received via the control signal transceiver unit 111. The content securing unit 112 outputs the so read-out content to the temporary content storage unit 113.

The temporary content storage unit 113 temporarily retains the content secured in and output from the content securing unit 112.

For the total of the contents, the cache server of interest has stored in its temporary content storage unit 113, the content list formulation unit 116 formulates a content list at a predetermined time interval or whenever a predetermined condition is met. The content list formulation unit 116 outputs a content list of the cache server of interest to the controller 160 via the control signal transceiver unit 111.

For each of the contents stored in the temporary content storage unit 113 of the cache server 110_1, the access number of times summation unit 130 receives the URL information of the requested content from the analysis unit 115. Based on the received information, the access number of times summation unit 130 sums the number of connection requests from the terminal 170 within a predetermined time span to calculate the number of times of accesses from one content to the next. The access number of times summation unit 130 outputs the so calculated number of times of accesses to the controller 160 via the control signal transceiver unit 111.

The load state detection unit 135 measures a load state Q of the cache server 110_1 at a predetermined time interval or whenever a predetermined condition is met. The load state detection unit 135 then forwards the so measured load state to the controller 160 via the control signal transceiver unit 111. Though not in a limiting meaning, the predetermined condition may be such a condition that a request to have a load state transmitted has been made from the controller 160 to the cache server. The load state detection unit 135 calculates the load state Q in accordance with the following equation (2):

$$Q = \sum_j A_j * S_j \qquad\qquad (2)$$

In the equation (2), Q is an index showing the load state of the cache server of interest, and j denotes the jth content temporarily stored in the cache server of interest. $A_j$ denotes the number of times of requests for the jth content, and $S_j$ the size of the jth content. The load state detection unit 135 may calculate the load state using an equation other than the equation (2).

The delivery unit 114 redeives the URL information of the content requested from the analysis unit 115. Based on this information, the delivery unit 114 searches the temporary content storage unit 113 to read out the content of interest. The delivery unit 114 then generates a packet in accordance with a predetermined protocol. The packet is sent to the SGSN/GGSN apparatus and thence sent to the terminal 170.

In Fig.1, the controller 160 receives the information on the topology of the mobile network and on the cost of the network routing path from the policy apparatus 165. If these information items remain unchanged during the operation or are predetermined fixed information, they may also be stored as table on board the controller 160.

It is possible for the content allocation calculation unit 185 to calculate the content allocations using an equation other than the equation (1).

It is also possible for the load state detection unit 135 to calculate the load state using an equation other than the equation (2).

The cache servers may also be interconnected, in which case the content may be accommodated between different cache servers. For example, it is now assumed that, when the mobile terminal 170 is connected to the cache server 110_1, the content requested is not cached in this cache server 110_1. In such case, an inquiry may be made at the controller 160, which controller 160 then determines whether the content of interest is owned by a neighbored cache server, such as cache server 110_2 or 110_N. The controller 160 may then instruct the cache server 110_1 to read out the content of interest from the cache server that owns the content of interest.

In Fig.1, a single cache server is connected to a single SGSN/GGSN apparatus. It is however also possible to connect a single cache server to a plurality of SGSN/GGSN apparatuses or to connect a plurality of cache servers to a single SGSN/GGSN apparatus.

The storage apparatus 120 may also be connected to the cache servers 110_1 to 110_N.

In Fig.1, the SGSN apparatus and the GGSN apparatus are unified into one as the SGSN/GGSN apparatus. However, it is also possible that the SGSN is distinct from the GGSN apparatus. In such case, at least one cache server is connected to the SGSN apparatus or to the GGSN apparatus.

The mobile terminal 170 may be a mobile handset, a smartphone or a PC loaded with a data communication card. Or, it may also be any other terminal provided that the terminal is capable of having communication with a mobile 3G network.

(Second Exemplary Embodiment)

The configuration as well as the operation of the content delivery system according to a second exemplary embodiment will now be described with reference to the drawings. Fig.5 depicts a block diagram showing an example configuration of the content delivery system of the present exemplary embodiment. In Fig.5, the parts or components denoted by the same symbols operate in the same manner as in Fig.1, and hence the corresponding description is dispensed with. Fig.5 shows a configuration employing, as a mobile network 250, an LTE (Long Term Evolution)/EPC (Evolved Packet Core) network which is not the 3G mobile network but is a 3.9th generation mobile network. In LTE, the functions of the base station apparatus and the RNC apparatus are degraded such that just an eNodeB (enhanced/evolved Node B) apparatus is used.

Also, in EPC, an S/P-GW (Serving/Packet data network Gateway) apparatus is connected to the eNodeB apparatus. By the S/P-GW apparatus is meant a apparatus comprised of an S-GW apparatus and a P-GW apparatus unified together. Moreover, Fig.5 shows a configuration in which an M-number of eNodeB apparatuses are connected to a single S/P-GW apparatus. For example, eNodeB apparatuses 260_1 to 260_N are connected to an S/P-GW apparatus 290_1.

It is noted that a single cache server is connected to each S/P-GW apparatus. As an example, the cache server 110_1 is connected to the S/P-GW apparatus 290_1.

In case the mobile terminal 170 sends a delivery connection request message, stating an IP address of the storage apparatus 120, an eNodeB apparatus whose service area covers the mobile terminal receives the connection request message. Such eNodeB apparatus is one of eNodeB apparatuses 261_1 to 261_N in the case of Fig.5. Such one of the eNodeB apparatuses 261_1 to 261_N writes the connection request message, the IP address of the storage apparatus 120, the IP address of the mobile terminal 170 and so forth, in the payload part of the GTP protocol, and forwards the resulting GTP packet to the S/P-GW apparatus 290_2.

The cache server 110_1 is of the same configuration as that shown in Fig.4. However, in the present exemplary embodiment, the connection destination of the control signal transceiver unit 111 is the S/P-GW apparatus 290_1. Hence, the control signal transceiver unit 111 receives the GTP packet, having saved therein the connection request message from the mobile terminal 170, the IP addresses and so forth, and the location information of the mobile terminal 170, from the S/P-GW apparatus 290_1. It is noted that other cache servers 110_2 to 110_N perform the exchange of the information similar to that described above with the S/P-GW apparatuses connected thereto.

Also, in the present exemplary embodiment, the storage apparatus 120 is connected to the S/P-GW apparatuses 290_1 to 290_N.

The controller 160 receives the mobile network topology and the cost of the network routing path from the policy apparatus 165. If these information items remain unchanged during the operation or are predetermined fixed information, they may also be stored in a table on board the controller 160.

It is possible for the content allocation calculation unit 185 to calculate the content allocations using an equation other than the equation (1).

It is also possible for the load state detection unit 135 to calculate the load state using an equation other than the equation (2).

The cache servers may also be interconnected, in which case the content may be accommodated between different cache servers. For example, it is now assumed that, when the mobile terminal 170 connects to the cache server 110_1, the content requested has not been cached in this cache server. In such case, an inquiry may be made at the controller 160, which controller 160 may then instruct the cache server 110_1 to read out the content not from the storage apparatus 120 but from a neighbored cache server, such as the cache server 110_2 or 110_N.

Fig.5 shows a case where a single cache server is connected to a single S/P-GW apparatus. It is however also possible to connect a single cache server to a plurality of S/P-GW apparatuses or to connect a plurality of cache servers to a single S/P-GW apparatus.

The storage apparatus 120 may also be connected to the cache servers 110_1 to 110_N.

Although the S-GW and the P-GW apparatus are unified in Fig.5 into one as the S/P-GW apparatus, it is also possible that the S-GW apparatus is distinct from the P-GW apparatus. In such case, at least one cache server is connected to the S-GW apparatus or to the P-GW apparatus.

The mobile terminal 170 may be a mobile handset, a smartphone or a PC loaded with a data communication card. Or, it may also be any other terminal provided that the terminal is capable of having communication with a mobile 3G network.

With the content delivery system according to the first and second exemplary embodiments, the following beneficial effects may be obtained.

As a first beneficial effect, the controller may allocate the contents with high access frequency in a predetermined manner to two or more cache servers. For those contents with not so high access frequency, the controller may calculate allocation of each of the contents to the cache server(s), using at least two out of the load state information, access number of times information, network information and the information on a terminal being or not being in a service area. Once the content allocation to the cache server(s) is determined, the content may be instructed to be cached. By so doing, even if accesses to the popular content are made in a biased manner, it is possible to balance the load on the mobile traffic to avoid load concentration in the network or in cache servers and hence avoid congestion in the mobile network. The beneficent effect will become most outstanding in case the number of terminals or the content capacity is increased. From the user perspective, such beneficent results may be obtained that there is only little risk of delay, packet losses, image freezing on the terminal apparatuses or voice interruption. In addition, in calculating allocations to the cache servers by the content allocation calculation unit of the controller, content allocations may be calculated only for a predetermined plural number of cache servers or for a plural number of cache servers that satisfy a predetermined condition. It is thus possible to reduce the volume of calculations necessary for calculating the content allocations.

The second beneficent result is such that, since the content requested by the terminal is delivered not from the storage apparatus but from the cache server, it is possible to reduce delay as from the time of making a request from the terminal until start of replay of the content at the terminal. It is thus possible to improve the QoE (Quality of Experience) of the end user.

The third beneficent result is such that, in producing the first and second beneficent results, there is no necessity of remodeling the terminal.

(Third Exemplary Embodiment)

The configuration as well as the operation of the content delivery system according to a third exemplary embodiment will now be described with reference to Fig.6 to 9.

In the exemplary embodiment, as now explained, the content is a moving picture, as an example. It is noted however that the same configuration may be used for the cases of the content being a still image, audio, voice, software, application or data.

Fig.6 depicts a block diagram showing an example configuration of a content delivery system of the present exemplary embodiment, in which a 3G mobile network is used as a mobile network and a SGSN/GGSN apparatus is used as a packet forwarding apparatus.

In Fig.6, a delivery server 124 delivers the content residing on the Internet 105. In the following explanation, these contents on the Internet are termed OTT (Over-the-Top) contents. It is assumed here that the OTT contents are compressed encoded bit streams of contents at least containing moving pictures, still pictures, Web pages, audio and voice, or files containing the compressed encoded bit streams. Note that the OTT contents may also be the software, applications or data.

An N-number (N≥ 2) of SGSN/GGSN apparatuses 190_1 to 190_N is arranged on a mobile network 150. A group of RNC (Radio Network Controller) apparatuses 195_1 to 195_L (L≥ 2) is arranged on the SGSN/GGSN apparatus 190_1, while a group of RNC apparatuses 197_1 to 197_L is arranged on the SGSN/GGSN apparatus 190_N. Although an L-number of RNC apparatuses is connected to the SGSN/GGSN apparatus 190_2, the RNC apparatuses are not shown in Fig.6 for simplicity of the drawing. In addition, an M-number (M≥ 2) of base station apparatuses is connected to each RNC apparatus. For example, an M-number (M≥ 2) of base station apparatuses 180_1 to 180_M is connected to the RNC apparatus 195_1.

In Fig.6, one cache server is connected to a GGSN function unit of each SGSN/GGSN apparatus. For example, a cache server 110_1 is connected to the SGSN/GGSN apparatus 190_1. By the SGSN/GGSN apparatus is meant such a apparatus in which an SGSN function unit and a GGSN function unit are installed in one and the same place.

An N-number (N≥ 2) of cache servers are connected to a single controller 160.

In case a mobile terminal 170 sends a delivery connection request message, stating a URL (Uniform Resource Locator) of the content it requests, a base station apparatus whose service area covers the mobile terminal receives the connection request message. Such base station apparatus is one of base station apparatuses 181_1 to 181_M in the case of Fig.6, and receives the delivery connection request message. The connection request message is sent to the RNC apparatus that supervises the base station apparatus. In the case of Fig.6, such RNC apparatus is an RNC apparatus 195_L.

On reception of the connection request message from the base station apparatus, the RNC apparatus 195_L saves the message, an IP address of the delivery server 124 and an IP address of the mobile terminal in a payload portion of a GTP packet. The RNC apparatus then forwards the GTP packet to the SGSN/GGSN apparatus 190_1 that collectively handles the RNC apparatuses 195_1 to 195_L.

The SGSN/GGSN apparatus 190_1 then receives the above mentioned GTP packet.

The cache server 110_1 is connected to a Gi interface of the GGSN function unit of the SGSN/GGSN apparatus 190_1. The cache server 110_N is connected to the Gi interface of the GGSN function unit of the SGSN/GGSN apparatus 190_N.

To the controller 160, there are connected the cache servers 110_1 to 110_N and the policy apparatus 165. The controller 160 allocates the contents owned by the delivery server 124 and having a higher access frequency in a predetermined manner to two or more cache servers. For part of the contents owned by the delivery server 124 and not having such higher access frequency, the controller calculates optimum allocations and instructs that the contents will be allocated to the cache server(s) based on the calculated results.

On reception of the content allocation instruction from the controller 160, the cache servers access the delivery server 124 via the SGSN/GGSN apparatus to save the content therein. When a request is made for the content from the mobile terminal 170, each cache server delivers the content of request to the mobile terminal 170.

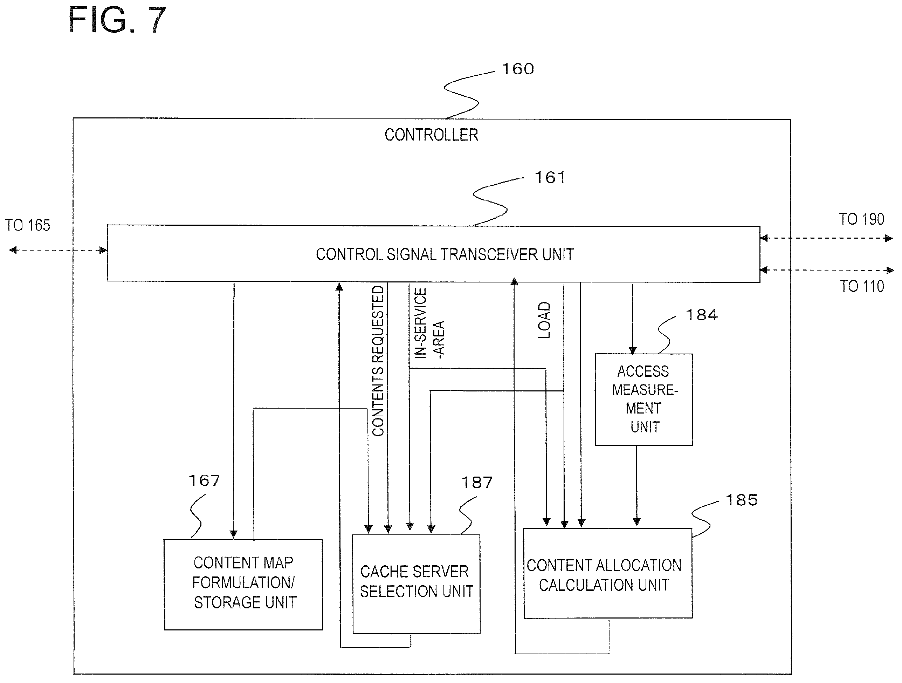

The configuration of the controller 160 will now be explained with reference to Fig.7, which depicts a block diagram showing an example configuration of the controller 160. Referring to Fig.7, the controller 160 includes a control signal transceiver unit 161, an access measurement unit 184, and a content allocation calculation unit 185. In addition, the controller includes a cache server selection unit 187 and a content map formulation/storage unit 167.

The control signal transceiver unit 161 receives, from each of the cache servers 110_1 to 110_N, the access frequency information to each content and the load status of each cache server. The control signal transceiver unit 161 outputs the former to the access measurement unit 184, while outputting the latter to the content allocation calculation unit 185 and to the cache server selection unit 187. The control signal transceiver unit 161 also receives the cost information, delay information or the like for each of network routing paths, from the policy apparatus 165, as the network topology information, and outputs these information items to the content allocation calculation unit 185. The control signal transceiver unit 161 also receives, from the packet forwarding apparatus 190_1 and so forth, the information of the terminal 170 being or not being in a service area, and outputs the information to the content allocation calculation unit 185 and to the cache server selection unit 187.

The access measurement unit 184 collects the access number of times to the respective contents from each cache server every pre-set time interval or whenever a pre-set condition has been met. The access measurement unit 184 adds the access number of times together for the total of the cache servers. The access measurement unit 184 adds the frequency of accesses for the cache servers in their entirety, from one content to another, and outputs the result to the content allocation calculation unit 185.

The content allocation calculation unit 185 receives, from the control signal transceiver unit 161, the state of load on the cache servers, the network topology information and the information of the terminal 170 being or not being in a service area. The content allocation calculation unit 185 also receives the frequency of accesses from the access measurement unit 184 from one content to the next.

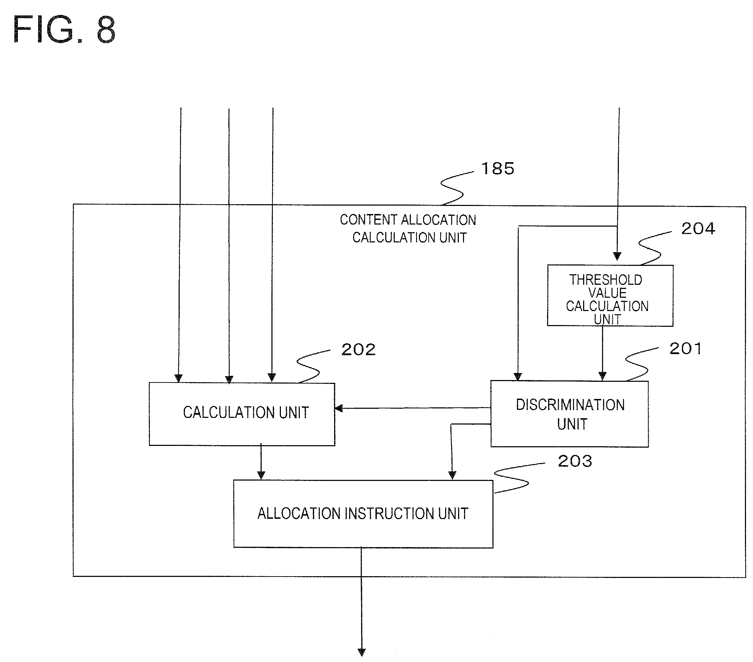

Fig.8 depicts a block diagram showing an example configuration of the content allocation calculation unit 185. Referring to Fig.8, the content allocation calculation unit 185 includes a threshold value calculation unit 204, a discrimination unit 201, a calculation unit 202 and an allocation instruction unit 203.

The threshold value calculation unit 204 receives, from the access measurement unit 184, the access frequency to each content, either periodically or whenever a request has been made, such as to find a threshold value T for the total of the contents. For example, an average access frequency and the access distribution are calculated for the total of the contents and a threshold value for the access frequency is set for an upper Y-percent part. The threshold value calculation unit 204 outputs the threshold value T to the discrimination unit 201. The discrimination unit 201 receives the access frequency to each of the contents from the access measurement unit 184 either periodically or whenever a request has been made. The discrimination unit 201 also receives the threshold value T from the threshold value calculation unit 204 and discriminates the contents the access frequency to which exceeds the threshold value T. The discrimination unit 201 outputs the information on those contents to the allocation instruction unit 203 so as to have the contents allocated in a predetermined manner. In the allocation of the contents in the predetermined manner, the allocation instruction unit 203 may instruct that the contents, the access frequency to which exceeds the predetermined threshold value T, will be allocated to the total of the cache servers. In the allocation of the contents in the predetermined manner, the allocation instruction unit 203 may also allocate those contents to a K-number ($K \geq 2$) of the cache servers, though not in a restrictive meaning. The discrimination unit 201 also outputs the information on the contents, the access frequency to which is less than the predetermined threshold value T and not less than a predetermined second threshold value T2, to the calculation unit 202.

The calculation unit 202 receives, from the discrimination unit 201, the information on the contents the frequency of accesses to which is less than the predetermined threshold value T and not less than the predetermined second threshold value T2. The calculation unit 202 also receives, from the control signal transceiver unit 161 of Fig.7, the information on the load states of cache servers, the network topology information and the information of the terminal 170 being or not being in a service area. Using two or more of these information items, the calculation unit 202 calculates the value of evaluation criteria Di for the content in question as determined by the equation (3):

$$Di = \max_i[\textstyle\sum_j Bij * Aj * Sj - \sum_j Cij * Aj * Sj] \qquad\qquad (3)$$

and decides on the cache server i for which the equation (3) is a maximum. The calculation unit 202 outputs the allocation instruction information for the content in question to the cache server, thus decided on, to the allocation instruction unit 203.

The calculation unit 202 selects such cache server i that will maximize Di of the equation (3). In the equation (3), Di is an evaluation function for the ith cache server, and Bij is a cost function in case the jth content is delivered from the delivery server 124 to the terminal without caching in the ith cache server. In the equation, Cij is a cost function in case the jth content is cached in the ith cache server and delivered to the terminal, Aj is the access frequency for the jth content and Sj is the size of the jth content in unit of kilobyte as an example. It is noted that the cost functions Bij and Cij are calculated, in accordance with predetermined criteria, from at least two information items out of the network topology information, load state of the cache server i and the information of the terminal 170 being or not being in a service area.

It is noted that, to reduce the volume of calculations of the equation (3), the equation (3) may be calculated only for a predetermined plural number of cache servers, or only for a cache server(s) that satisfies a predetermined condition(s). The predetermined condition(s) may be such a condition that the equation (3) is to be calculated only for such cache server(s) the load state of which as delivered from the cache server is lower than a predetermined threshold value. Still another calculation volume reducing method may be such a one that, out of contents, the access frequency to which is less than the threshold value T, only a predetermined number P of the contents is taken out in the falling order of the access frequency and is subject to allocation calculations in accordance with the equation (3).

The allocation instruction unit 203 instructs each of the cache servers of interest, via the control signal transceiver unit 161 of Fig.7, to secure and save a copy of the content of interest. The destination in which the copy of the content of interest is to be secured may be the delivery server 124. As an alternative configuration, in case a neighbored cache server is caching the content of interest, a copy may be secured from such neighbored cache server. Such alternative configuration may be implemented by reading out from the content map formulation/storage unit 167 the information as to which cache server is caching the content of interest and by entering the so read out information in the allocation instruction unit 203 of the content allocation calculation unit 185.

For the content the access frequency to which is less than the threshold value T and which is not subject to allocation calculations at the calculation unit 202, the allocation instruction unit 203 may send to the cache server a command to perform the following processing. That is, in case a request is made from the terminal 170, a content of interest is read out from the delivery server 124 and cached in the temporary content storage unit 113 of the cache server so as to be then delivered to the terminal 170. As an alternative configuration, if a request is made from the terminal 170, the content of interest may be read out from the delivery server 124 and delivered to the terminal 170 without caching in the temporary content storage unit 113 of the cache server.

Returning to Fig.7, the cache server selection unit 187 receives, from the control signal transceiver unit 161, the information of the terminal 170 being or not being in a service area, the load state of each cache server and the information on the content requested by the terminal 170, such as URL. The cache server selection unit 187 also receives the content map from the content map formulation/storage unit 167. The content map is a map showing which content is being cached by each cache server. The cache server selection unit 187 selects the cache server by the following procedures: Initially, the cache server selection unit 187 selects a group of cache servers caching the content requested by the terminal 170. Then, using the information on the load state and the information of the mobile terminal being or not being in a service area, the cache server selection unit 187 selects the cache server the load state of which is not higher than a predetermined threshold value and the location of which is closest to the terminal 170.

The cache server selection unit then instructs the selected cache server to deliver the content requested by the terminal via the control signal transceiver unit 161. It may sometimes occur that the content map of the content map formulation/storage unit 167 indicates that none of the cache servers is caching the content of interest, such as when the content of interest is low in access frequency. In such case, such cache server the load on which is lower than a predetermined threshold value and the location of which is closest to the terminal 170 is selected using the information on the load state and the in-service-area information.

The content map formulation/storage unit 167 receives, at a predetermined time interval, a content list from each of the cache servers 110_1 to 110_N via the control signal transceiver unit 161. The content map formulation/storage unit 167 formulates and holds in store a content map indicating which content is temporarily stored in which cache server and outputs the so stored content map to the cache server selection unit 187 either periodically or when a request is made.

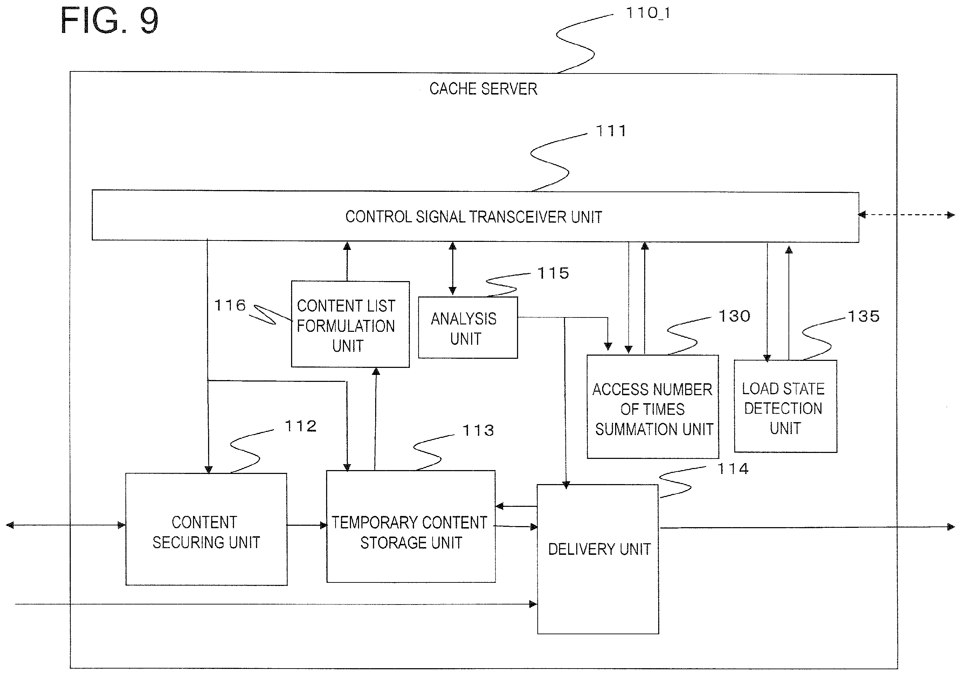

Referring to Fig.9, the configuration of the cache server 110_1 connected to the SGSN/GGSN apparatus 190_1 will be explained by way of explaining the configuration of the cache server. It is noted that the other cache servers 110_2 to 110_N are the same in configuration as the cache server 110_1 and hence the corresponding explanation is dispensed with.

Fig.9 depicts a block diagram showing an example configuration of the cache server 110_1. Referring to Fig.9, the cache server 110_1 includes a control signal transceiver unit 111, an analysis unit 115, a content securing unit 112, a temporary content storage unit 113, a content list formulation unit 116, an access number of times summation unit 130, a load state detection unit 135 and a delivery unit 114.

In Fig.9, the control signal transceiver unit 111 of the cache server, selected by the cache server selection unit 187 shown in Fig.7, receives a connection request message from the mobile terminal 170 and a GTP packet containing a reception IP address of the mobile terminal, the URL of the content requested and so on, from the SGSN/GGSN apparatus 190_1. The control signal transceiver unit 111 also receives the information of the mobile terminal 170 being or not being in a service area from the SGSN/GGSN apparatus.

The analysis unit 115 reads out the connection request message entered in the payload part of the GTP packet to extract the information including the reception IP address of the mobile terminal 170, the URL of the requested content and the like. The analysis unit 115 sends the information via the control signal transceiver unit 111 to the controller 160. The analysis unit 115 outputs the information including the URL of the content to the access number of times summation unit 130, while sending the information of the mobile terminal 170 being or not being in a service area to the controller 160.

The content securing unit 112 reads out the specified content from the delivery server 124 in accordance with a content allocation calculation command sent from the allocation instruction unit 203 shown in Fig.8. The content securing unit 112 outputs the so read-out content to the temporary content storage unit 113.

The temporary content storage unit 113 temporarily caches the content secured and output by the content securing unit 112.

The content list formulation unit 116 formulates a content list for the total of the contents, cached by the cache server of interest in the temporary content storage unit 113, at a predetermined time interval or whenever a predetermined condition is met. The content list formulation unit 116 sends the content list of the cache server of interest to the controller 160 via the control signal transceiver unit 111.

For each content, a connection request to which has been made to the cache server 110_1, the access number of times summation unit 130 receives the URL information of the requested content from the analysis unit 115. Based on this URL information, the access number of times summation unit 130 sums the number of connection requests from the terminals 170 within a predetermined time span to calculate the content based access number of times. The access number of times summation unit 130 sends the calculated result via the control signal transceiver unit 111 to the controller 160.

The load state detection unit 135 measures the load state Q of the cache server 110_1 at a predetermined time interval or whenever a predetermined condition is met, and sends the measured result to the controller 160 via the control signal transceiver unit 111. Though not in a limiting sense, the predetermined condition may be such a condition in which the controller 160 has requested the cache server to send its load state. The load state detection unit 135 calculates the load state Q in accordance with the following equation (4):

$$Q = \sum_j A_j * S_j \qquad\qquad (4)$$

In the above equation (4), Q denotes an index specifying the load state of the cache server of interest, j denotes a jth content temporarily stored in the cache server of interest, Aj denotes the number of times of requests for the jth content and Sj denotes the size of the jth content. It is possible for the load state detection unit 135 to calculate the load state using an equation other than the equation (4).

The delivery unit 114 receives the URL information of the content requested by the analysis unit 115. Based on this URL information, the delivery unit 114 searches the temporary content storage unit 113 to read out the content of interest. The delivery unit 114 then generates a packet in accordance with a predetermined protocol to send the packet to the SGSN/GGSN apparatus to deliver it via the SGSN/GGSN apparatus to the terminal 170. If the content of interest is not cached in the temporary content storage unit 113, and the allocation instruction unit 203 of Fig.8 has instructed reading out the content of interest from the delivery server 124 and delivering the content, the latter is read out from the delivery server 124. It is then cached in the temporary content storage unit 113 of the cache server and then delivered to the terminal 170. As an alternative configuration, the content of interest may be read out from the delivery server 124 and delivered to the terminal 170 without being cached in the temporary content storage unit 113 of the cache server.

In Fig.6, the controller 160 receives the information such as that on the topology of the mobile network or on the cost of the network routing path from the policy apparatus 165. However, if these information items are unchanged during the operation or are predetermined fixed information, the information items may be stored on board the controller 160 as a table.

It is possible for the content allocation calculation unit 185 to instruct performing calculations for content allocations in accordance with the equation (3) and caching the content in the cache server of interest at a predetermined time interval or whenever a predetermined condition is met. Though not in a limiting meaning, the predetermined condition may be such a condition in which the frequency of accesses to the content as found presently by the access measurement unit 184 has been changed as compared to that found previously, with the rate of change exceeding a predetermined threshold value. It is also possible for the content allocation calculation unit 185 to calculate content allocations using an equation different from the equation (3).

It is also possible for the load state detection unit 135 to calculate the load state using an equation different from the equation (4).

The cache servers may also be interconnected, in which case the content may be accommodated between different cache servers. For example, it is now assumed that, when the mobile terminal 170 is connected to the cache server 110_1, the content requested is not cached in this cache server. In such case, an inquiry may be made at the controller 160, which controller 160 then determines whether the content of interest is retained by a neighbored cache server, such as cache server 110_2 or 110_N. The controller 160 then may instruct the cache server 110_1 to read out the content of interest from the cache server that holds the content of interest. By so doing, the volume of the traffic needed in accessing a delivery server may be lesser than that in case the content is read out from the delivery server 124. Additionally, the time needed in content delivery to the terminal may be reduced.

In Fig.6, a single cache server is connected to a single SGSN/GGSN apparatus. It is however also possible to connect a single cache server to a plurality of SGSN/GGSN apparatuses or to connect a plurality of cache servers to a single SGSN/GGSN apparatus.

The delivery server 124 may be connected to the cache servers 110_1 to 110_N.

Although the SGSN and the GGSN apparatuses are unified into one as the SGSN/GGSN apparatus, it is also possible that the SGSN apparatus is distinct from the GGSN apparatus. In such case, at least one cache server is connected to the SGSN apparatus or to the GGSN apparatus.

The mobile terminal 170 may be a mobile handset, a smartphone or a PC loaded with a data communication card. Or, it may also be any other terminal provided that the terminal used is capable of having communication with a mobile 3G network.

(Fourth Exemplary Embodiment)

The configuration as well as the operation of the content delivery system according to a fourth exemplary embodiment will now be described with reference to the drawings. Fig. 10 depicts a block diagram showing an example configuration of the content delivery system of the present exemplary embodiment. In Fig. 10, the component parts denoted by the same numerals as those used in Fig.6 operate in the same manner as in Fig.6, and hence the corresponding explanation is dispensed with. Fig.10 shows a configuration employing, as a mobile network 250, an LTE (Long Term Evolution)/EPC (Evolved Packet Core) network, which is not the 3G mobile network but is a 3.9th generation mobile network. In LTE, the functions of the base station apparatus and the RNC apparatus are degraded such that just an eNodeB (enhanced/evolved Node B) apparatus is used.

Also, in EPC, an S/P-GW (Serving/Packet Data-Gateway) apparatus is connected to the eNodeB apparatus. By the S/P-GW apparatus is meant such a apparatus comprised of an S-GW apparatus and a P-GW apparatus unified together. Moreover, Fig. 10 shows a configuration in which an M-number of eNodeB apparatuses is connected to a single S/P-GW apparatus. There are connected eNodeB apparatuses 260_1 to 260_M to an S/P-GW apparatus 290_1, as an example.

It is noted that a single cache server is connected to each S/P-GW apparatus. As an example, the cache server 110_1 is connected to the S/P-GW apparatus 290_1.

In case the mobile terminal 170 sends a delivery connection request message, stating an IP address of the delivery server 124, an eNodeB apparatus whose service area covers the mobile terminal receives the connection request message. Such eNodeB apparatus is one of eNodeB apparatuses 261_1 to 261_M in the case of Fig. 10. Such one of the eNodeB apparatuses 261_1 to 261_M has the connection request message, the IP address of the delivery server, the IP address of the mobile terminal 170 and so on, stored in the payload part of the GTP protocol, and forwards the resulting GTP packet to the S/P-GW apparatus 290_2.

The cache server 110_1 is of the same configuration as that shown in Fig.9. However, in the present exemplary embodiment, the connection destination of the control signal transceiver unit 111 is the S/P-GW apparatus 290_1. Hence, the control signal transceiver unit 111 receives the GTP packet, having saved therein the connection request message from the mobile terminal 170, the IP addresses and so forth, and the location information of the mobile terminal 170, from the S/P-GW apparatus 290_1. It is noted that other cache servers 110_2 to 110_N exchange the information with the S/P-GW apparatuses connected thereto in a manner similar to that described above.

Also, in the present exemplary embodiment, the storage apparatus 121 is connected to S/P-GW apparatuses 290_1 to 290_N.

The controller 160 receives the information on the mobile network topology and on the cost of the network routing path from the policy apparatus 165. If these information items remain unchanged during the operation or are predetermined fixed information, they may also be stored as table on board the controller 160.

The cache servers may also be interconnected, in which case the content may be accommodated between different cache servers. For example, it is now assumed that, when the mobile terminal 170 is connected to the cache server 110_1, the content requested is not cached in this cache server. In such case, an inquiry may be made at the controller 160, which controller 160 then may instruct the cache server 110_1 to read out the content of interest not from the storage apparatus 121 but from the neighbored cache server, such as the cache server 110_2 or 110_N. By so doing, the volume of the traffic needed in accessing a delivery server may be lesser than that in case the content is read out from the storage apparatus 121. Additionally, the time needed in content delivery to the terminal may be reduced.

Fig. 10 shows a case where a single cache server is connected to a single S/P-GW apparatus. It is however also possible to connect a single cache server to a plurality of S/P-GW apparatuses or to connect a plurality of cache servers to a single S/P-GW apparatus.

The storage apparatus 121 may be connected to the cache server 110_1 to 110_N.

In Fig.10, the S-GW apparatus and the P-GW apparatus are unified into one as the S/P-GW apparatus. It is however also possible that the S-GW apparatus and the P-GW apparatus are distinct from each other. In such case, at least one cache server is connected to the S-GW apparatus or to the P-GW apparatus.

The mobile terminal 170 may be a mobile handset, a smartphone or a PC loaded with a data communication card. Or, it may also be any other terminal provided that the terminal is capable of having communication with a mobile 3.9G network.

With the content delivery systems of the third and fourth exemplary embodiments, the following beneficial effects may be derived.

As a first beneficial effect, the controller may allocate the content with access frequency higher than the threshold value to two or more cache servers in a predetermined manner. For a part of the contents with the access frequency lower than the threshold value, the controller may calculate allocations to the cache server(s) for each content using at least two out of the load state information, access number of times information, network information and the information of a terminal being or not being in a service area. The controller then instructs that the content, the allocation of which to the cache server(s) has been determined, will be cached accordingly. The controller then caches the content temporarily in the cache server(s) to deliver the so cached content. By so doing, even if the content of interest is popular, it is possible to balance out the load on the mobile traffic as well as to avoid that the access is concentrated on a delivery server in search for the content, thus avoiding congestion in the mobile network. The beneficent effect will become most outstanding in case the number of terminals or the content capacity is increased. From the user perspective, such beneficent results may be obtained that there is only little risk of delay, packet losses, picture image freezing on the terminal apparatuses or voice interruption. In addition, in calculating content allocations to the cache servers by the content allocation calculation unit of the controller, such content the access frequency to which is higher than the predetermined threshold value may be allocated to two or more cache servers in a predetermined manner. For a part of the content, the access frequency to which is lower than the threshold value, optimum content allocation to a cache server(s) may be calculated, using evaluation criteria predetermined by using two or more out of the information on access frequency, the information on load state, the information of the mobile terminal being or not being in a service area and the network topology information. In this case, the volume of calculations necessary for content allocations may be reduced.

The second beneficent result is such that, since the content requested by the terminal is delivered not from the delivery server but from the cache server, it is possible to reduce delay as from the time of making a request from the terminal until start of replay of the content at the terminal. It is thus possible to improve the QoE (Quality of Experience) of the end user.

The third beneficent result is such that, in producing the first and second beneficent results, there is no necessity of remodeling the terminal.

The present invention may encompass a wide variety of modifications or corrections that may occur to those skilled in the art in accordance with the entire disclosure of the present invention, inclusive of claims and the technical concept of the invention.

REFERENCE SIGNS LIST

| | |
|---|---|
| 105 | Internet |
| 101_1 to 101_N | cache server |
| 111 | control signal transceiver unit |
| 112 | content securing unit |
| 113 | temporary content storage unit |

| | |
|---|---|
| 114 | delivery unit |
| 115 | analysis unit |
| 116 | content list formulation unit |
| 120, 121 | storage unit |
| 124 | delivery server |
| 130 | access number of times summation unit |
| 135 | load state detection unit |
| 150 | mobile network |
| 160 | controller |
| 161 | control signal transceiver unit |
| 165 | policy apparatus |
| 167 | content map formulation/storage unit |
| 170 | mobile terminal |
| 180_1 to 180_M, 181_1 to 181_M, 182_1 to 182_M, 183_1 to 183_M | base station apparatus |
| 184 | access measurement unit |
| 185 | content allocation calculation unit |
| 187 | cache server selection unit |
| 190_1 to 190_N | SGSN/GGSN apparatus |
| 195_1 to 195_L, 197_1 to 197_L | RNC apparatus |
| 201 | discrimination unit |
| 202 | calculation unit |
| 203 | allocation instruction unit |
| 204 | threshold value calculation unit |
| 250 | mobile network |
| 260_1 to 260_M, 261_1 to 261_M, 262_1 to 262_M | eNodeB apparatus |
| 290_1 to 260_N | S/P-GW apparatus |

**Claims**

1. A content delivery system, comprising:

a delivery server on the Internet or a storage apparatus on a mobile network, the delivery server or the storage apparatus holding a plurality of contents in store;
a packet forwarding apparatus that forwards a packet;
a plurality of cache servers that temporarily retain at least part of the plurality of contents; and
a controller that controls the plurality of cache servers, wherein
the controller receives, from the plurality of cache servers, an access frequency to each of the plurality of contents and a load state of each of the plurality of cache servers, receives, from the packet forwarding apparatus, information of a terminal being or not being in a service area, decides that a content, with an access frequency which is higher than a predetermined threshold value, will be allocated to predetermined two or more of the plurality of cache servers, decides that at least part of the other contents will be allocated to the plurality of cache servers using at least one out of the information of the terminal being or not being in a service area and topology information of the mobile network, and instructs the plurality of cache servers to retain the plurality of contents depending on the decided allocation, and
the plurality of cache servers caches the plurality of contents as instructed, and, on reception of a request for a content from the terminal, delivers the requested content to the terminal via the packet forwarding apparatus.

2. The content delivery system according to claim 1, wherein
the controller decides that the content, the access frequency to which is not higher than the predetermined threshold value, will be allocated to a cache server that minimizes $\sum_j Cij*Aj*Sj$, where Cij is a cost function of a jth content for an ith cache server out of the plurality of cache servers, Aj is an access frequency to the jth content and Sj is a size of the jth content.

3. The content delivery system according to claim 2, wherein
the controller calculates the cost function Cij using at least one out of the load state of the ith cache server out of the plurality of cache servers, the information of the mobile terminal being or not being in a service area and the topology information of the mobile network.

**4.** The content delivery system according to claim 1, wherein
the plurality of cache servers temporarily retain at least part of the plurality of the contents delivered thereto from the delivery server or from the storage apparatus, and
the controller decides that at least part of the other contents will be allocated to the plurality of cache servers, using a predetermined evaluation criteria and at least two out of the access frequency, the load state, the information of the mobile terminal being or not being in a service area and the topology information of the mobile network, and instructs the plurality of the cache servers to retain the at least part of the other contents depending on the decided allocation.

**5.** The content delivery system according to claim 4, wherein
the controller decides that the content, the access frequency to which is not higher than a predetermined threshold value, will be allocated to a cache server that maximizes $\sum_j Bij*Aj*Sj - \sum_j Cij*Aj*Sj$, where Bij is a cost function in case a jth content is not cached in an ith cache server of the plurality of cache servers and is delivered from the delivery server or the storage apparatus to the terminal, Cij is a cost function in case the jth content is cached in the ith cache server and delivered to the terminal, Aj is an access frequency to the jth content and Sj is a size of the jth content.

**6.** The content delivery system according to claim 5, wherein
the controller calculates the cost functions Bij and Cij using at least one out of the load state of the ith cache server of the plurality of cache servers, the information of the terminal being or not being in a service area and the topology information of the mobile network.

**7.** The content delivery system according to any one of claims 1 to 6, wherein
the controller decides that the plurality of contents will be allocated to a predetermined plural number of cache servers or a plural number of cache servers satisfying a predetermined condition, out of the plurality of cache servers.

**8.** The content delivery system according to any one of claims 1 to 7, wherein
the packet forwarding apparatus is an SGSN (Serving GPRS Support Node) apparatus, a GGSN (Gateway GPRS Support Node) apparatus or an xGSN apparatus of a mobile packet network or an S-GW (Serving Gateway) apparatus, a P-GW (Packet data network Gateway) apparatus or an S/P-GW apparatus of a mobile EPC (Evolved Packet Core) network.

**9.** The content delivery system according to any one of claims 1 to 8, wherein
the content includes at least one out of a moving picture, a still picture, voice, audio, software, application and data.

**10.** A content delivery method, comprising:

by a controller, receiving, from a plurality of cache servers that temporarily retains at least part of a plurality of contents stored in a delivery server on the Internet or a storage apparatus on a mobile network, an access frequency to each of the plurality of contents and a load state of each of the plurality of cache servers;
receiving, from the packet forwarding apparatus, information of a terminal being or not being in a service area;
deciding that a content, with an access frequency which is higher than a predetermined threshold value, will be allocated to predetermined two or more of the plurality of cache servers;
deciding that at least part of the other contents will be allocated to the plurality of cache servers using at least one out of the information of the terminal being or not being in a service area and topology information of the mobile network; and
instructing the plurality of cache servers to retain the plurality of contents depending on the decided allocation.

**11.** The content delivery method according to claim 10, wherein
the controller decides that the content, the access frequency to which is not higher than the predetermined threshold value, will be allocated to a cache server that minimizes $\sum_j Cij*Aj*Sj$, where Cij is a cost function of a jth content for an ith cache server out of the plurality of cache servers, Aj is an access frequency to the jth content under management and Sj is a size of the jth content under management.

**12.** The content delivery method according to claim 11, wherein
the controller calculates the cost function Cij using at least one out of the load state of the ith one of the plurality of cache servers, the information of the terminal being or not being in a service area and the topology information of the mobile network.

**13.** The content delivery method according to claim 10, wherein
the plurality of cache servers temporarily retain at least part of the plurality of the contents delivered from the delivery server or from the storage apparatus, and
the method further comprises, by the controller, deciding that at least part of the other contents will be allocated to the plurality of cache servers, using a predetermined evaluation criteria and at least two out of the access frequency, the load state, the information of the mobile terminal being or not being in a service area and the topology information of the mobile network.

**14.** The content delivery method according to claim 13, wherein
the controller allocates the contents, the access frequency to which is not higher than the predetermined threshold value, to a cache server that maximizes $\sum_j Bij*Aj*Sj - \sum_j Cij*Aj*Sj$, where Bij is a cost function in case a jth content is not cached in an ith cache server of the plurality of cache servers and is delivered from the delivery server or the storage apparatus to the terminal, Cij is a cost function in case the jth content is cached in the ith cache server and delivered to the terminal, Aj is an access frequency to the jth content and Sj is a size of the jth content.

**15.** The content delivery method according to claim 14, wherein
the controller calculates the cost functions Bij and Cij using at least one out of the load state of the ith cache server of the plurality of cache servers, the information of the terminal being or not being in a service area, and the topology information of the mobile network.

**Patentansprüche**

**1.** Content-Liefersystem, aufweisend:

einen Lieferserver im Internet oder eine Speichervorrichtung in einem mobilen Netzwerk, wobei der Lieferserver oder die Speichervorrichtung eine Mehrzahl von Contents im Speicher halten;
eine Paket-Weiterleitungsvorrichtung, die ein Paket weiterleitet;
eine Mehrzahl von Cache-Servern, die temporär zumindest einen Teil der Mehrzahl von Contents halten;
einen Controller, der die Mehrzahl von Cache-Servern steuert, wobei der Controller von der Mehrzahl von Cache-Servern eine Zugriffsfrequenz auf jede der Mehrzahl von Contents und einen Ladezustand von jedem der Mehrzahl von Cache-Servern empfängt, von der Paket-Weiterleitungsvorrichtung Informationen darüber erhält, ob ein Terminal in einem Servicebereich ist oder nicht, entscheidet, ob ein Content mit einer Zugriffsfrequenz, die höher ist als ein vorbestimmter Schwellenwert, zu zwei oder mehreren vorbestimmten der Mehrzahl von Cache-Server allokiert wird unter Verwendung von zumindest einem aus der Information darüber, ob das Terminal in einem Servicebereich ist oder nicht und Topologie-Informationen des mobilen Netzwerks, und die Mehrzahl von Cache-Servern, die Mehrzahl von Contents abhängig von der entschiedenen Allokation halten, und
die Mehrzahl von Cache-Servern die Mehrzahl von Contents wie instruiert cachen und bei Empfang einer Anforderung für einen Content von den Terminal den angeforderten Content an das Terminal über die Paket-Weiterleitungsvorrichtung liefern.

**2.** Das Content-Liefersystem nach Anspruch 1, wobei
der Controller entscheidet, dass der Content, für den die Zugriffsfrequenz nicht höher ist als der vorbestimmte Schwellenwert, zu einem Cache-Server allokiert wird, der $\sum_j Cij*Aj*Sj$, minimiert, wobei Cij eine Kostenfunktion eines j-ten Contents für einen i-ten Cache-Server aus der Mehrzahl von Cache-Servern ist, Aj eine Zugriffsfrequenz auf den j-ten Content und Sj eine Größe des j-ten Contents ist.

**3.** Das Content-Liefersystem nach Anspruch 2, wobei
der Controller die Kostenfunktion Cij unter Verwendung zumindest einem aus dem Ladestatus des i-ten Cache-Servers aus der Mehrzahl von Cache-Servern, der Information darüber, ob das mobile Terminal in einem Servicebereich ist oder nicht, und der Topologie-Information des mobilen Netzwerks berechnet.

**4.** Das Content-Liefersystem nach Anspruch 1, wobei
die Mehrzahl von Cache-Servern temporär zumindest einen Teil der Mehrzahl von Contents, die an sie von dem Lieferserver oder von einer Speichervorrichtung geliefert wurden, halten, und
der Controller entscheidet, dass ein Teil der anderen Contents zu der Mehrzahl von Cache-Servern allokiert wird unter Verwendung eines vorbestimmten Evaluationskriteriums und zumindest zweien aus der Zugriffsfrequenz, dem Ladestatus, der Information ob das mobile Terminal in einem Servicebereich ist oder nicht und der Topologie-Information des mobilen Netzwerks, und die Mehrzahl der Cache-Server instruiert, Mindest einen Teil der anderen Inhalte abhängig von der entschiedenen Allokation zu halten.

5. Das Content-Liefersystem nach Anspruch 4, wobei
der Controller entscheidet, dass der Content, für den die Zugriffsfrequenz nicht höher ist als ein vorbestimmter Schwellenwert, zu einem Cache-Server allokiert wird, der $\sum_j Bij*Aj*Sj - \sum_j Cij*Aj*Sj$ maximiert, wobei Bij eine Kostenfunktion dafür ist, dass ein j-ter Content nicht in einem i-ten Cache-Server aus der Mehrzahl von Cache-Servern gecached wird und dem Lieferserver oder der Speichervorrichtung an das Terminal geliefert wird, Cij eine Kostenfunktion dafür ist, dass ein j-ter Contents im i-ten Cache-Server gecached und an das Terminal geliefert wird, Aj eine Zugriffsfrequenz auf den j-ten Content und Sj eine Größe des j-ten Contents ist.

6. Das Content-Liefersystem nach Anspruch 5, wobei
der Controller die Kostenfunktionen Bij und Cij unter Verwendung zumindest von einem aus dem Ladestatus des i-ten Casche-Servers aus der Mehrzahl von Cache-Servern, der Information darüber, ob das mobile Terminal in einem Servicebereich ist oder nicht, und der Topologie-Information des mobilen Netzwerks berechnet.

7. Das Content-Liefersystem nach einem der Ansprüche 1 bis 6, wobei der Controller scheidet, dass die Mehrzahl von Contents zu einer vorbestimmten Mehrzahl von Cache-Servern oder einer vorbestimmten Mehrzahl von Cache-Servern, die eine vorbestimmte Bedingung erfüllen, aus der Mehrzahl von Cache-Servern allokiert werden.

8. Das Content-Liefersystem nach einem der Ansprüche 1 bis 7, wobei die Paket-Weiterleitungsvorrichtung eine SGSN (Serving GPRS Support Node)-Vorrichtung, eine GGSN (Gateway GPRS Support Node)-Vorrichtung oder eine xGSN-Vorrichtung eines mobilen Paket-Netzwerks oder einen S-GW (Serving Gateway)-Vorrichtung, eine P-GW (Packet data network Gateway)-Vorrcihtung oder eine S/P-GW-Vorrichtung eines mobilen EPC (Evolved Packet Core)-Netzwerks ist.

9. Das Content-Liefersystem nach einem der Ansprüche 1 bis 8, wobei wobei der Content zumindest eines einschließt aus einem Bewegtbild, einem Standbild, Sprache, Audio, Software, Anwendungen und Daten.

10. Ein Content-Lieferverfahren, aufweisend:

Empfangen, durch einen Controller, von einer Mehrzahl von Cache-Servern, die temporär zumindest einen Teil einer Mehrzahl von Contents halten, die in einem Lieferserver im Internet oder einer Speichervorrichtung in einem mobilen Netzwerk gespeichert sind, einer Zugriffsfrequenz auf jede der Mehrzahl von Contents und eines Ladestatus von jedem der Mehrzahl von Cache-Servern;
Empfangen, von der Paket-Weiterleitungsvorrichtung, von Informationen darüber, ob ein Terminal in einem Servicebereich ist oder nicht;
entscheiden, dass ein Content mit einer Zugriffsfrequenz, die höher ist als ein vorbestimmter Schwellenwert, zu vorbestimmten zwei oder mehr der Mehrzahl von Cache-Servern allokiert wird;
Entscheiden, dass zumindest ein Teil der anderen Contents zu der Mehrzahl von Cache-Servern allokiert wird unter Verwendung von zumindest einem aus der Information darüber, ob das Terminal in einem Servicebereich ist oder nicht und Topologie-Informationen des mobilen Netzwerks; und
Instruieren der Mehrzahl von Cache-Servern, die Mehrzahl von Contents abhängig von der entschiedenen Allokation zu halten.

11. Das Content-Lieferverfahren nach Anspruch 10, wobei der Controller entscheidet, dass der Content, für den die Zugriffsfrequenz nicht höher ist als der vorbestimmte Schwellenwert, zu einem Cache-Server allokiert wird, der $\sum_j Cij*Aj*Sj$ minimiert, wobei Cij eine Kostenfunktion eines j-ten Contents für einen i-ten Cache-Server aus der Mehrzahl von Cache-Servern ist, Aj eine Zugriffsfrequenz auf den j-ten Content und Sj eine Größe des j-ten Contents ist.

12. Das Content-Lieferverfahren nach Anspruch 11, wobei der Controller die Kostenfunktion Cij unter Verwendung zumindest einem aus dem Ladestatus des i-ten Cache-Servers aus der Mehrzahl von Cache-Servern, der Information darüber, ob das mobile Terminal in einem Servicebereich ist oder nicht, und der Topologie-Information des mobilen Netzwerks berechnet.

13. Das Content-Lieferverfahren nach Anspruch 10, wobei die Mehrzahl von Cache-Servern temporär zumindest einen Teil der Mehrzahl von Contents, die an sie von dem Lieferserver oder von einer Speichervorrichtung geliefert wurden, halten, und

das Verfahren ferner aufweist: Entscheiden, durch den Controller, dass ein Teil der anderen Contents zu der Mehrzahl von Cache-Servern allokiert wird unter Verwendung eines vorbestimmten Evaluationskriteriums und zumindest zweien aus der Zugriffsfrequenz, dem Ladestatus, der Information ob das mobile Terminal in einem Servicebereich ist oder nicht und der Topologie-Information des mobilen Netzwerks.

**14.** Das Content-Lieferverfahren nach Anspruch 13, wobei der Controller die Inhalte, für die die Zugriffsfrequenz nicht höher ist als ein vorbestimmter Schwellwert, , zu einem Cache-Server allokiert der $\sum_j Bij*Aj*Sj - \sum_j Cij*Aj*Sj$ maximiert, wobei Bij eine Kostenfunktion dafür ist, dass ein j-ter Content nicht in einem i-ten Cache-Server aus der Mehrzahl von Cache-Servern gecached wird und von dem Lieferserver oder der Speichervorrichtung an das Terminal geliefert wird, Cij eine Kostenfunktion dafür ist, dass ein j-ter Contents im i-ten Cache-Server gecached und an das Terminal geliefert wird, Aj eine Zugriffsfrequenz auf den j-ten Content und Sj eine Größe des j-ten Contents ist.

**15.** Das Content-Lieferverfahren nach Anspruch 14, wobei der Controller die Kostenfunktionen Bij und Cij unter Verwendung zumindest von einem aus dem Ladestatus des i-ten Cashe-Servers aus der Mehrzahl von Cache-Servern, der Information darüber, ob das mobile Terminal in einem Servicebereich ist oder nicht, und der Topologie-Information des mobilen Netzwerks berechnet.

## Revendications

**1.** Système de diffusion de contenu, comprenant :

un serveur de diffusion sur Internet ou un appareil de stockage sur un réseau mobile, le serveur de diffusion ou l'appareil de stockage maintenant une pluralité de contenus en mémoire ;
un appareil de transfert de paquet qui transfère un paquet ;
une pluralité de serveurs caches qui conservent temporairement au moins une partie de la pluralité de contenus ; et
un contrôleur qui contrôle la pluralité de serveurs caches, dans lequel
le contrôleur reçoit, en provenance de la pluralité de serveurs caches, une fréquence d'accès à chacun de la pluralité de contenus et un état de charge de chacun de la pluralité de serveurs caches, reçoit, en provenance de l'appareil de transfert de paquet, des informations d'un terminal qui est ou qui n'est pas dans une zone de service, décide qu'un contenu, avec une fréquence d'accès qui est supérieure à une valeur de seuil prédéterminée, sera alloué à deux serveurs caches prédéterminés ou plus de la pluralité de serveurs caches, décide qu'au moins une partie des autres contenus sera allouée à la pluralité de serveurs caches en utilisant au moins une parmi les informations du terminal qui est ou qui n'est pas dans une zone de service et des informations de topologie du réseau mobile, et donne pour instruction à la pluralité de serveurs caches de conserver la pluralité de contenus en fonction de l'allocation décidée, et
la pluralité de serveurs caches met en cache la pluralité de contenus selon les instructions, et, à la réception d'une requête pour un contenu en provenance du terminal, diffuse le contenu demandé au terminal via l'appareil de transfert de paquet.

**2.** Système de diffusion de contenu selon la revendication 1, dans lequel
le contrôleur décide que le contenu, auquel la fréquence d'accès n'est pas supérieure à la valeur de seuil prédéterminée, sera alloué à un serveur cache qui minimise $\sum_j Cij*Aj*Sj$, où Cij est une fonction de coût d'un jième contenu pour un iième serveur cache parmi la pluralité de serveurs caches, Aj est une fréquence d'accès au jième contenu et Sj est une taille du jième contenu.

**3.** Système de diffusion de contenu selon la revendication 2, dans lequel
le contrôleur calcule la fonction de coût Cij en utilisant au moins un parmi l'état de charge du iième serveur cache de la pluralité de serveurs caches, les informations du terminal mobile qui est ou qui n'est pas dans une zone de service et les informations de topologie du réseau mobile.

**4.** Système de diffusion de contenu selon la revendication 1, dans lequel
la pluralité de serveurs caches conserve temporairement au moins une partie de la pluralité des contenus diffusés à celle-ci à partir du serveur de diffusion ou de l'appareil de stockage, et
le contrôleur décide qu'au moins une partie des autres contenus sera allouée à la pluralité de serveurs caches, en utilisant un critère d'évaluation prédéterminé et au moins deux parmi la fréquence d'accès, l'état de charge, les informations du terminal mobile qui est ou qui n'est pas dans une zone de service et les informations de topologie du réseau mobile, et donne pour instruction à la pluralité des serveurs caches de conserver la au moins une partie des autres contenus en fonction de l'allocation décidée.

5. Système de diffusion de contenu selon la revendication 4, dans lequel
le contrôleur décide que le contenu, auquel la fréquence d'accès n'est pas supérieure à une valeur de seuil prédéterminée, sera alloué à un serveur cache qui maximise $\sum_j Bij*Aj*Sj - \sum_j Cij*Aj*Sj$, où Bij est une fonction de coût dans le cas où un jième contenu n'est pas mis en cache dans un iième serveur cache de la pluralité de serveurs caches et est diffusé à partir du serveur de diffusion ou de l'appareil de stockage au terminal, Cij est une fonction de coût dans le cas où le jième contenu est mis en cache dans le iième serveur cache et diffusé au terminal, Aj est une fréquence d'accès au jième contenu et Sj est une taille du jième contenu.

6. Système de diffusion de contenu selon la revendication 5, dans lequel
le contrôleur calcule les fonctions de coût Bij et Cij en utilisant au moins un parmi l'état de charge du iième serveur cache de la pluralité de serveurs caches, les informations du terminal qui est ou qui n'est pas dans une zone de service et les informations de topologie du réseau mobile.

7. Système de diffusion de contenu selon l'une quelconque des revendications 1 à 6, dans lequel
le contrôleur décide que la pluralité de contenus sera allouée à un nombre pluriel prédéterminé de serveurs caches ou un nombre pluriel de serveurs caches satisfaisant à une condition prédéterminée, parmi la pluralité de serveurs caches.

8. Système de diffusion de contenu selon l'une quelconque des revendications 1 à 7, dans lequel
l'appareil de transfert de paquet est un appareil SGSN (Serving GPRS Support Node, Noeud de support GPRS de desserte), un appareil GGSN (Gateway GPRS Support Node, Noeud de support GPRS de transit) ou un appareil xGSN d'un réseau par paquets mobile ou un appareil S-GW (Serving Gateway, Passerelle de desserte), un appareil P-GW (Packet data network Gateway, Passerelle de réseau de données par paquets) ou un appareil S/P-GW d'un réseau EPC (Evolved Packet Core, Coeur de paquet évolué) mobile.

9. Système de diffusion de contenu selon l'une quelconque des revendications 1 à 8, dans lequel
le contenu inclut au moins un parmi une image animée, une image fixe, voix, audio, logiciel, application et données.

10. Procédé de diffusion de contenu, comprenant :

par un contrôleur, la réception, en provenance d'une pluralité de serveurs caches qui conserve temporairement au moins une partie d'une pluralité de contenus stockée dans un serveur de diffusion sur Internet ou un appareil de stockage sur un réseau mobile, d'une fréquence d'accès à chacun de la pluralité de contenus et d'un état de charge de chacun de la pluralité de serveurs caches ;
la réception, en provenance de l'appareil de transfert de paquet, d'informations d'un terminal qui est ou qui n'est pas dans une zone de service ;
la décision qu'un contenu, avec une fréquence d'accès qui est supérieure à une valeur de seuil prédéterminée, sera alloué à deux serveurs caches prédéterminés ou plus de la pluralité de serveurs caches ;
la décision qu'au moins une partie des autres contenus sera allouée à la pluralité de serveurs caches en utilisant au moins une parmi les informations du terminal qui est ou qui n'est pas dans une zone de service et des informations de topologie du réseau mobile ; et
le fait de donner pour instruction à la pluralité de serveurs caches de conserver la pluralité de contenus en fonction de l'allocation décidée.

11. Procédé de diffusion de contenu selon la revendication 10, dans lequel
le contrôleur décide que le contenu, auquel la fréquence d'accès n'est pas supérieure à la valeur de seuil prédéterminée, sera alloué à un serveur cache qui minimise $\sum_j Cij*Aj*Sj$, où Cij est une fonction de coût d'un jième contenu pour un iième serveur cache parmi la pluralité de serveurs caches, Aj est une fréquence d'accès au jième contenu sous gestion et Sj est une taille du jième contenu sous gestion.

12. Procédé de diffusion de contenu selon la revendication 11, dans lequel
le contrôleur calcule la fonction de coût Cij en utilisant au moins un parmi l'état de charge du iième serveur cache de la pluralité de serveurs caches, les informations du terminal qui est ou qui n'est pas dans une zone de service et les informations de topologie du réseau mobile.

**13.** Procédé de diffusion de contenu selon la revendication 10, dans lequel
la pluralité de serveurs caches conserve temporairement au moins une partie de la pluralité des contenus diffusés à partir du serveur de diffusion ou de l'appareil de stockage, et
le procédé comprend en outre, par le contrôleur, la décision qu'au moins une partie des autres contenus sera allouée à la pluralité de serveurs caches, en utilisant un critère d'évaluation prédéterminé et au moins deux parmi la fréquence d'accès, l'état de charge, les informations du terminal mobile qui est ou qui n'est pas dans une zone de service et les informations de topologie du réseau mobile.

**14.** Procédé de diffusion de contenu selon la revendication 13, dans lequel
le contrôleur alloue les contenus, auxquels la fréquence d'accès n'est pas supérieure à la valeur de seuil prédéterminée, à un serveur cache qui maximise $\sum_j Bij*Aj*Sj-\sum_j Cij*Aj*Sj$, où Bij est une fonction de coût dans le cas où un jième contenu n'est pas mis en cache dans un iième serveur cache de la pluralité de serveurs caches et est diffusé à partir du serveur de diffusion ou de l'appareil de stockage au terminal, Cij est une fonction de coût dans le cas où le jième contenu est mis en cache dans le iième serveur cache et diffusé au terminal, Aj est une fréquence d'accès au jième contenu et Sj est une taille du jième contenu.

**15.** Procédé de diffusion de contenu selon la revendication 14, dans lequel
le contrôleur calcule les fonctions de coût Bij et Cij en utilisant au moins un parmi l'état de charge du iième serveur cache de la pluralité de serveurs caches, les informations du terminal qui est ou qui n'est pas dans une zone de service et les informations de topologie du réseau mobile.

FIG. 1

## FIG. 2

CONTROLLER — 160

CONTROL SIGNAL TRANSCEIVER UNIT — 161

TO 165

TO 190

TO 110

CONTENTS REQUESTED

IN-SERVICE-AREA

LOAD

ACCESS MEASUREMENT UNIT — 184

CONTENT MAP FORMULATION/ STORAGE UNIT — 167

CACHE SERVER SELECTION UNIT — 187

CONTENT ALLOCATION CALCULATION UNIT — 185

EP 2 722 765 B1

FIG. 3

# FIG. 4

CACHE SERVER — 110_1

CONTROL SIGNAL TRANSCEIVER UNIT — 111

116 — CONTENT LIST FORMULATION UNIT

ANALYSIS UNIT — 115

ACCESS NUMBER OF TIMES SUMMATION UNIT — 130

LOAD STATE DETECTION UNIT — 135

CONTENT SECURING UNIT — 112

TEMPORARY CONTENT STORAGE UNIT — 113

DELIVERY UNIT — 114

EP 2 722 765 B1

# FIG. 5

EP 2 722 765 B1

# FIG. 6

MOBILE NETWORK

DELIVERY SERVER

SGSN/ GGSN APPAR- ATUS

RNC APPAR- ATUS

CACHE SERVER

CONT- ROLLER

SGSN/ GGSN APPAR- ATUS

RNC APPAR- ATUS

POLICY APPAR- ATUS

CACHE SERVER

RNC APPAR- ATUS

SGSN/ GGSN APPAR- ATUS

RNC APPAR- ATUS

CACHE SERVER

MOBILE TERMIN- AL

EP 2 722 765 B1

# FIG. 7

CONTROLLER (160)

Control signal transceiver unit (161)

TO 165

TO 190

TO 110

CONTENTS REQUESTED

IN-SERVICE-AREA

LOAD

ACCESS MEASURE-MENT UNIT (184)

CONTENT MAP FORMULATION/ STORAGE UNIT (167)

CACHE SERVER SELECTION UNIT (187)

CONTENT ALLOCATION CALCULATION UNIT (185)

EP 2 722 765 B1

# FIG. 8

EP 2 722 765 B1

CONTENT ALLOCATION CALCULATION UNIT — 185

THRESHOLD VALUE CALCULATION UNIT — 204

CALCULATION UNIT — 202

DISCRIMINATION UNIT — 201

ALLOCATION INSTRUCTION UNIT — 203

# FIG. 9

CACHE SERVER 110_1

CONTROL SIGNAL TRANSCEIVER UNIT 111

CONTENT LIST FORMULATION UNIT

ANALYSIS UNIT 115

ACCESS NUMBER OF TIMES SUMMATION UNIT 130

LOAD STATE DETECTION UNIT 135

116

CONTENT SECURING UNIT 112

TEMPORARY CONTENT STORAGE UNIT 113

DELIVERY UNIT 114

EP 2 722 765 B1

34

# FIG. 10

EP 2 722 765 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011044829 A1
- US 2012203910 A1, LAN GANG [CN]

- JP 2003228534 A